(19) Europäisches Patentamt / European Patent Office / Office européen des brevets

(11) **EP 3 255 113 B1**

(12) **EUROPEAN PATENT SPECIFICATION**

(45) Date of publication and mention of the grant of the patent:
**05.11.2025 Bulletin 2025/45**

(21) Application number: **16173598.0**

(22) Date of filing: **08.06.2016**

(51) International Patent Classification (IPC):
***C09J 201/10*** *(2006.01)* ***C08K 3/36*** *(2006.01)*
***C08K 5/54*** *(2006.01)* ***C08K 5/541*** *(2006.01)*
***C08K 5/544*** *(2006.01)* ***C08K 5/548*** *(2006.01)*
***C09J 143/04*** *(2006.01)* ***C08K 9/06*** *(2006.01)*
***C08L 101/10*** *(2006.01)*

(52) Cooperative Patent Classification (CPC):
(C-Sets available)
**C09J 201/10; C08K 3/36; C08K 5/54; C08K 5/5415; C08K 5/544; C08K 5/548; C08K 9/06; C08L 101/10;** C08K 5/5445; C08K 2201/006 (Cont.)

# (54) ADHESIVE AND/OR SEALANT COMPOSITION WITH HIGH INITIAL TACK

KLEBSTOFF- UND/ODER DICHTSTOFFZUSAMMENSETZUNG

ADHÉSIF ET/OU COMPOSITION D'ÉTANCHÉITÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**13.12.2017 Bulletin 2017/50**

(73) Proprietor: **Soudal**
**2300 Turnhout (BE)**

(72) Inventors:
- **VAN DEN PLAS, Dave**
  **2920 Kalmthout (BE)**
- **GEBOES, Peter**
  **2630 Aartselaar (BE)**

(74) Representative: **Gevers Patents**
**De Kleetlaan 7A**
**1831 Diegem (BE)**

(56) References cited:
**EP-A1- 2 682 432**
**WO-A1-2009/014077**
**WO-A1-2017/148750**
**WO-A2-2014/033273**
**JP-A- 2010 111 745**
**US-A1- 2005 211 580**

- **REZANIA ALIREZA ET AL: "A probabilistic approach to measure the strength of bone cell adhesion to chemically modified surfaces", ANNALS OF BIOMEDICAL ENGINEERING, vol. 25, no. 1, 1 January 1997 (1997-01-01), New York, pages 190 - 203, XP093209869, ISSN: 0090-6964, DOI: 10.1007/BF02738550**

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08L 101/10, C08K 3/36, C08K 5/54;**
**C08L 101/10, C08K 5/54, C08K 9/06;**
**C09J 201/10, C08K 3/36, C08K 5/54;**
**C09J 201/10, C08K 5/54, C08K 9/06**

## Description

### FIELD OF INVENTION

The present invention relates to an improved method for the manufacturing of an adhesive and/or sealant composition having a high initial tack. The present invention further relates to an adhesive and/or sealant composition having a high initial tack and the use thereof in the bonding, sealing or coating of materials.

### BACKGROUND OF THE INVENTION

Adhesive and/or sealant compositions have numerous applications, for example in the bonding, sealing or coating of materials.

Many adhesive and/or sealant compositions comprise reactive silane-modified polymer systems wherein the silane-groups comprise hydrolysable groups. These silane-modified polymers are capable, even at room temperature, of condensing with one another by elimination of the hydrolysable groups. Depending on the amount of hydrolysable groups and their construction, the products are principally long-chain polymers (thermoplastics), relatively wide-meshed three-dimensional networks (elastomers) or else highly crosslinked systems (thermosets). Such adhesive and/or sealant compositions comprising reactive silane-modified polymer systems are notably described in US 2015/0203624 A1, EP 0240044 A2, WO 2004/090060 A2, EP 1043356 A1, EP 2581406 A1 and WO 2006/078756 A1.

Adhesive and/or sealant compositions frequently require a high initial tack. As used herein, the term "initial tack" refers to the tack value measured directly after application of the adhesive and/or sealant composition prior to cross-linking and/or curing of the composition. High initial tack adhesive and/or sealant compositions are needed in applications where a good strength and a low slumping behavior are required. Such applications include, for example, the use of an adhesive and/or sealant composition in inclined or vertical areas as well as applications where movement of the parts to be joined by means of the adhesive and/or sealant composition, during the curing of said composition is undesirable.

High initial tack in an uncured composition is not to be confused with a high 'initial adhesiveness' as obtained in classical two-component compositions where the second component is used to accelerate curing after application and wherein there is still a time period (typically minutes to hours) wherein the obtained mixture is having low initial tack properties.

One of the drawbacks of these adhesive and/or sealant compositions having a high initial tack lies in the fact that the production of said compositions is very problematic. Due to the high tack and the high viscosity of said compositions mixing and pumping of the material to downstream processes can be very troublesome.

It is known that adhesive and/or sealant compositions often fail to exhibit adequate initial tack properties. Both one- and two-component adhesive and/or sealant compositions are in need of improvement in this respect. Due to the inadequate initial tack, immediately after the parts to be joined have been fitted together, the joined parts have to be mechanically fixed until the bond has developed sufficient strength.

Another disadvantage of known one- and two-component adhesive and/or sealant compositions is that the initial tack and viscosity is increased to such extent that application or production of the composition is impaired.

For two-component adhesive and/or sealant compositions having a high initial tack, often either or both of the components have such a high initial tack and high viscosity to an extent that the mixing of a relatively viscous component with a relatively liquid (less viscous and with a lower initial tack) component or the mixing of two relatively viscous components is impaired. There is insufficient compatibility between the two components to achieve homogenous mixing in an easy way. Since a thorough mixing is required in order to get efficient and quick activation of the silane-modified polymer systems, this implies that specialized and expensive equipment is required for homogeneous mixing of the two-components, which is not advantageous.

WO 2014/033273 A2 relates to a one- and two-component adhesive composition having a high initial tack, comprising a moisture cross-linking silyl modified polymer and an organoclay-based rheology controller being an alkyl ammonium salt modified mineral clay mixture and a method of production of said adhesive composition. WO 2014/033273 A2 provides relatively low viscous 1K adhesive compositions of which the viscosity increases to the desired value for early strength, or tack, upon application when said adhesive compositions are exposed to water which activates the organoclay-based rheology controller. WO 2014/033273 A2 further describes two-component adhesives which have a low viscosity upon application, where the thickening effect takes place upon combining of the two components.

However, this process requires the use of an organoclay-based rheology controller. To ensure correct dispersion of such organoclay-based rheology controllers usually high shear forces are required. If the dispersion is insufficient there is a risk of seeding, a tendency towards turbidity in the uncured liquid compositions and adverse effects on gloss and haze in the final cured product. WO 2014/033273 A2 does not describe the process to be a versatile process whereby the initial tack of the adhesive composition is tunable over a broad range.

US 2012/0298300 A1 relates to moisture-curing compositions based on silane-functional polymers, which are

suitable as adhesives, sealants or coatings, and which can present improved initial strengths.

However, US 2012/0298300 A1 is not concerned with a method for the manufacturing of a one- and two-component adhesive and/or sealant composition having a high initial tack. Furthermore, the adhesives as described in US 2012/0298300 A1 are warm- or hot-melt adhesives which have to be heated and melted at a high temperature in their use, and thus require a heat coating apparatus. Moreover, the type of objects to be bonded by this adhesive is usually rather limited. There are no initial tack values disclosed.

EP 0819749 A2 relates to an adhesive or sealant composition with high initial tack, comprising a moisture cross-linking polymer and rheology controller. EP 0819749 A2 further relates to a process for the production of said adhesive or sealant composition. Said rheology controller increases the viscosity of the adhesive and thereby provides sufficient initial tack to the end-product but only after thermal activation of the rheology controller. EP 0819749 A2 mentions that the preferred minimum storage modulus is 200 $kN/m^2$. However, no initial tack values are disclosed.

Examples of adhesive or sealant compositions comprising a silane-modified polymer and a hydrophobic fumed silica produced by treating a hydrophilic fumed silica with a hydrophobizing agent are disclosed in US 2005/211580 A1, JP 2010 111745 A, US 2015/007938 A1 and WO 2009/014077 A1.

However, the drawback of this process is that the rheology controller is only activated after application of heat to the end-product, meaning that the adhesive composition only exhibits a high initial tack after application of heat which adds an extra step to the production process and therefore is impractical and less economical.

Accordingly, there is a further need to provide a versatile method for the manufacturing of an adhesive and/or sealant composition whereby the tack value of the adhesive and/or sealant composition is tunable over a broad range, and allows to obtain very high tack values. Furthermore, there is a need for a more economical and more practical method for the manufacturing of said adhesive and/or sealant composition having such a high tack without the need of using specialized equipment and without the need of using organoclay-based or heat-activatable rheology controllers.

## SUMMARY OF THE INVENTION

The Applicant has now found a method to manufacture an adhesive and/or sealant composition whereby the tack value of the adhesive and/or sealant composition is tunable over a broad range, including high tack values, which fulfils the above mentioned needs in a surprisingly effective manner.

Thus, the object of the present invention is to provide a method for manufacturing a composition [composition (C), herein after] suitable for use as a sealant and/or adhesive which comprises the steps of:

step 1: mixing at least one silane-modified polymer [silane-modified polymer (P), herein after], wherein said silane-modified polymer (P) comprises at least one silane group of general formula (I);

$$-(A)_b-(CH_2)_m-SiR^1{}_a(Y)_{3-a} \qquad \text{formula (I)}$$

wherein:

- A is each independently a divalent linker group selected from the group consisting of -O-, -S-, $-(R^2)N-$, $-O-CO-N(R^2)-$, $-N(R^2)-CO-O-$, $-N(R^2)-CO-NH-$, $-NH-CO-N(R^2)-$, and $-N(R^2)-CO-N(R^2)-$, wherein $R^2$ is hydrogen, $C_{1-18}$ alkyl, $C_{2-18}$ alkenyl or $C_{1-6}$ aryl group;
- $R^1$ is a $C_{1-10}$ alkyl, $C_{2-10}$ alkenyl, $C_{1-10}$ cycloalkyl or $C_{6-10}$ aryl group;
- Y is each independently a hydroxyl or hydrolysable group;
- a is an integer ranging from 0 to 3;
- b is an integer ranging from 0 to 1;
- m is an integer ranging from 0 to 6;

with at least one hydrophobic fumed silica [hydrophobic fumed silica (S), herein after], having a BET surface area of at least 50 $m^2/g$ wherein the at least one hydrophobic fumed silica (S) is produced by treating a hydrophilic fumed silica with a hydrophobizing agent wherein the hydrophobizing agent is octamethylcyclotetrasiloxane or alkylsilanes, whereby alkylsilanes are chosen from octyltrialkoxysilanes or hexyltrialkoxysilanes, so as to obtain a mixture [mixture (M), herein after], wherein said mixture (M) has a tack value $T_0$, measured in accordance with the rheological tack test method as cited further below in the description [tack test, herein after], equal to or less than 1000 Pa;

step 2: adding to the mixture (M) as obtained in step 1, at least one rheology modifier of general formula (II) [rheology modifier (R), herein after] or an oligomeric siloxane wherein the oligomeric siloxane is formed by condensation of partially or completely hydrolyzed silanes of general formula (II),

$$X-B-SiR^3{}_c(OR^4)_{3-c} \qquad \text{formula (II)}$$

wherein:

- X is independently selected from the group consisting of:

  - $SR^5$ wherein $R^5$ is independently selected from hydrogen, $C_{1-10}$ alkyl, $C_{2-10}$ alkenyl, $C_{1-10}$ cycloalkyl, $C_{6-10}$ aryl group or - (C=O)-$R^6$ wherein $R^6$ is a $C_{1-10}$ alkyl, $C_{2-10}$ alkenyl or $C_{6-10}$ aryl group,
  - $NR^7R^8$ wherein $R^7$ and $R^8$ are each independently selected from the group consisting of hydrogen; $C_{1-10}$ alkyl, $C_{2-10}$ alkenyl, $C_{1-10}$ cycloalkyl, $C_{6-10}$ aryl or $C_{6-10}$ aralkyl wherein said alkyl, alkenyl, cycloalkyl aryl and aralkyl are optionally substituted by hydroxyl, $SiR^{11}_b(OR^{12})_{3-b}$, or $NR^{13}R^{14}$; or-(C=O)-$NR^9R^{10}$; and wherein $R^9$ and $R^{10}$ are each independently selected from the group consisting of hydrogen, $C_{1-10}$ alkyl, $C_{2-10}$ alkenyl, $C_{1-10}$ cycloalkyl, $C_{6-10}$ aryl or $C_{6-10}$ aralkyl; and wherein $R^{11}$ and $R^{12}$ are each independently selected from the group consisting of a $C_{1-10}$ alkyl, $C_{2-10}$ alkenyl, $C_{1-10}$ cycloalkyl or $C_{6-10}$ aryl group; and wherein $R^{13}$ and $R^{14}$ are each independently selected from the group consisting of hydrogen, $C_{1-10}$ alkyl, $C_{2-10}$ alkenyl, $C_{1-10}$ cycloalkyl, $C_{6-10}$ aryl or $C_{6-10}$ aralkyl and each optional alkyl, alkenyl, cycloalkyl aryl and aralkyl is further optionally substituted by a hydroxyl or amino group,
  - $OR^{15}$ wherein $R^{15}$ is independently selected from hydrogen, $C_{1-10}$ alkyl, $C_{2-10}$ alkenyl, $C_{1-10}$ cycloalkyl, $C_{6-10}$ aryl or $C_{6-10}$ aralkyl wherein said alkyl, alkenyl, cycloalkyl aryl and aralkyl are optionally substituted by one or more substituents selected from OH, $NR^{16}R^{17}$ wherein $R^{16}$ and $R^{17}$ either individually each represents a hydrogen or $C_{1-12}$ alkyl which optionally comprises heteroatoms in the form of ether oxygen, thioether sulfur or tertiary amine nitrogen, or $R^{16}$ and $R^{17}$ together represent a divalent $C_{2-10}$ aliphatic group, which optionally comprises heteroatoms in the form of ether oxygen, thioether sulfur or tertiary amine nitrogen;

- B is a divalent linker group independently selected from the group consisting of a divalent saturated $C_{1-20}$ aliphatic group, a divalent unsaturated $C_{2-20}$ aliphatic group, a divalent $C_{6-20}$ aromatic group or a divalent $C_{6-20}$ aralkylene group;
- $R^3$ is a $C_{1-10}$ alkyl, $C_{2-10}$ alkenyl, $C_{1-10}$ cycloalkyl or $C_{6-10}$ aryl group wherein said alkyl, alkenyl, cycloalkyl and aryl, are optionally substituted with a halogen atom, an aryl group or an aralkyl group;
- $R^4$ is a $C_{1-20}$ alkyl or $C_{6-10}$ aryl group wherein said alkyl and aryl, are optionally substituted with a halogen atom, an aryl group or an aralkyl group;
- c is an integer ranging from 0 to 3;

thereby forming the composition (C) wherein said composition (C) has a tack value T, measured in accordance with the tack test, wherein

$$T \geq \frac{K\left(\frac{T_0}{260\ \mathrm{Pa}}\right)^{11} + L}{1 + \left(\frac{T_0}{260\ \mathrm{Pa}}\right)^{11}} \qquad \text{(equation 1)}$$

and K is equal to or greater than 6000 Pa,
and L is equal to or greater than 1000 Pa; and wherein the weight percent of the hydrophobic fumed silica (S) as used in step 1, relative to the total weight of the composition (C) as obtained in step 2, is equal to or greater than 10 wt.%.

It is a further object of the present invention to provide a composition, an adhesive and/or sealant, and a cured composition according to claims 11 to 13.

It is also a further object of the present invention to provide a method of bonding two substrates or at least part of two substrates and a method of sealing or coating by using such composition according to claims 14 and 15.

## DETAILED DESCRIPTION OF THE INVENTION

Within the context of the present invention, the expression "at least one silane-modified polymer (P)" is intended to denote one or more than one silane-modified polymer (P). Mixtures of polymers (P) can also be used for the purpose of the invention. The expression "at least one hydrophobic fumed silica (S) is intended to denote one or more than one hydrophobic fumed silica (S). Mixtures of hydrophobic fumed silica (S) can also be used for the purpose of the invention.

The expression "at least one rheology modifier (R)", is intended to denote one or more than one rheology modifier (R). Mixtures of rheology modifiers (R) can also be used for the purpose of the invention.

In the remainder of the text, the expressions "silane-modified polymer (P)", "hydrophobic fumed silica (S)" and "rheology modifier (R)" are understood, for the purposes of the present invention, both in the plural and the singular form.

As used herein the term "alkyl" and "alkenyl" have the broadest meaning generally understood in the art, and may include a moiety which is linear, branched, cyclic or a combination thereof having the specified number of carbon atoms, for example, the term "$C_{1-10}$ alkyl" is intended to denote an alkyl group having from 1 to 10 carbon atoms, all of which may be optionally substituted.

The term "aliphatic" or "aliphatic group", as used herein, denotes a hydrocarbon moiety that may be linear, branched, cyclic or a combination thereof which may be completely saturated or may contain one or more units of unsaturation, but which is not aromatic and is having the specified number of carbon atoms, for example, the term "$C_{1-10}$ aliphatic group" is intended to denote an aliphatic group having from 1 to 10 carbon atoms, all of which may be optionally substituted

The term "saturated", as used herein, means that a moiety has no double or triple bonds.

The term "unsaturated", as used herein, means that a moiety has one or more double or triple bonds.

The term "aryl" refers to an aromatic group having the specified number of carbon atoms such as notably phenyl, biphenyl and naphtyl, all of which may be optionally substituted.

The term "aralkyl" refers to an alkyl group substituted with an aryl group having the specified number of carbon atoms. Suitable aralkyl groups include benzyl, tolyl, and the like, all of which may be optionally substituted.

The term "aralkylene" refers to a divalent aralkyl moiety.

## SILANE-MODIFIED POLYMER (P)

Thus, in step 1 of the method of the present invention use is made of at least one silane-modified polymer (P) having at least one silane group of general formula (I) [silane group (SG), herein after]:

$$-(A)_b-(CH_2)_m-SiR^1{}_a(Y)_{3-a} \qquad \text{formula (I)}$$

wherein:

- A is each independently a divalent linker group selected from the group consisting of -O-, -S-, $-(R^2)N-$, $-O-CO-N(R^2)-$, $-N(R^2)-CO-O-$, $-N(R^2)-CO-NH-$, $-NH-CO-N(R^2)-$, and $-N(R^2)-CO-N(R^2)-$, wherein $R^2$ is hydrogen, $C_{1-18}$ alkyl, $C_{2-18}$ alkenyl or $C_{1-6}$ aryl group;
- $R^1$ is a $C_{1-10}$ alkyl, $C_{2-10}$ alkenyl, $C_{1-10}$ cycloalkyl or $C_{6-10}$ aryl group;
- Y is each independently a hydroxyl or hydrolysable group;
- a is an integer ranging from 0 to 3;
- b is an integer ranging from 0 to 1;
- m is an integer ranging from 0 to 6.

Preferably, A in the silane group (SG) of general formula (I) in the silane-modified polymer (P) is a divalent linker group independently selected from the group consisting of -O-,$-(R_2)N-$, $-O-CO-N(R^2)-$, $-N(R^2)-CO-O-$, $-N(R_2)-CO-NH-$, $-NH-CO-N(R^2)-$, and $-N(R^2)-CO-N(R^2)-$, wherein $R_2$ is hydrogen, $C_{1-10}$ alkyl, $C_{2\ -10}$ alkenyl or $C_{1-6}$ aryl group. More preferably, A is a divalent linker group independently selected from the group consisting of -O-, $-O-CO-N(R^2)-$, $-N(R^2)-CO-O-$, $-N(R_2)-CO-N(R_2)-$, wherein $R_2$ is hydrogen, $C_{1-5}$ alkyl or $C_{1-6}$ aryl group. Even more preferably, A is a divalent linker group independently selected from the group consisting of -O-, $-O-CO-N(R^2)-$, $-N(R^2)-CO-N(R^2)-$, wherein $R_2$ is hydrogen, $C_{1-5}$ alkyl or $C_{1-6}$ aryl group.

Preferably, each of $R^1$ in the silane group (SG) of general formula (I) in the silane-modified polymer (P) is independently selected from a $C_{1-10}$ alkyl, $C_{2-10}$ alkenyl; $C_{1-10}$ cycloalkyl or $C_{6-10}$ aryl group. More preferably, each of $R^1$ is independently selected from $C_{1-5}$ alkyl or $C_{1-8}$ cycloalkyl group. Even more preferably, each of $R^1$ is independently selected from methyl, ethyl, propyl, butyl, pentyl, isopropyl, isobutyl, tert-butyl. More preferably, $R^1$ is methyl or ethyl.

Preferably, a in the silane group (SG) of general formula (I) in the silane-modified polymer (P) is an integer ranging from 0 to 1, more preferably a is 1.

Preferably, b in the silane group (SG) of general formula (I) in the silane-modified polymer (P) is equal to 1.

Preferably, m in the silane group (SG) of general formula (I) in the silane-modified polymer (P) is an integer ranging from 0 to 4, more preferably m is an integer ranging from 0 to 3, even more preferably m is 1 or 3, most preferably m is 1.

As said, each of Y in the silane group (SG) of general formula (I) in the silane-modified polymer (P) as used in step 1 of the method of the present invention, is a hydroxyl or a hydrolysable group.

When Y is a hydrolysable group, Y is selected from the group consisting of halogen atoms, alkoxy groups, acyloxy groups, ketoxymate groups, amino groups, amide groups, acid amide groups, aminooxy groups, mercapto groups, and alkenyloxy groups. Preferably, Y is selected from the group consisting of alkoxy groups, acyloxy groups, ketoxymate groups, amino groups, amide groups, aminooxy groups, mercapto groups, and alkenyloxy groups. More preferably, Y is an alkoxy group such as a methoxy, ethoxy, propoxy, butoxy group and the like. Most preferably, Y is a methoxy or an ethoxy group.

It is understood that each silane group (SG) of general formula (I) can act as a side group and/or an end group which is attached to at least one main chain of the silane-modified polymer (P) [main chain (MC), herein after].

Preferably, the silane group (SG) of general formula (I) is an end-group.

The building blocks of the at least one main chain (MC) of the silane-modified polymer (P) as used in the method of the present invention, [building blocks (B), herein after] are not particularly limited.

In a preferred embodiment of the method of the present invention, suitable building blocks (B) of the main chain (MC) of the silane-modified polymer (P), as used in step 1 of the method of the present invention, may be chosen among one or more than one building blocks (B) selected from the group consisting of polysiloxanes, polysiloxane-urea/urethane copolymers, polyurethanes, polyureas, polyethers, polyesters, polyacrylates and polymethacrylates, polycarbonates, polystyrenes, polyamides, polyvinyl esters or polyolefins such as, for example, polyethylene, poly-butadiene, ethylene-olefin copolymers and styrene-butadiene copolymers, or a mixture of two or more thereof. Preferably, the building blocks (B) may be selected from the group consisting of polysiloxanes, polyurethanes, polyethers, or mixtures thereof. More preferably, the building blocks (B) may be selected from polyurethanes, polyethers, or mixtures thereof. Most preferably, the building blocks (B) are polyethers.

In an alternative embodiment of the method of the present invention, suitable building blocks (B) of the main chain (MC) of the silane-modified polymer (P), as used in step 1 of the method of the present invention, may be monomeric units selected from the group consisting of: acrylic monomers, silicone monomers, carboxylic acid monomers, alcohols, isocyanate monomers, epoxide monomers, allyl monomers, amine monomers, anhydride monomers, styrene monomers, vinyl monomers, or mixtures thereof.

Suitable preparation methods of the main chain (MC) of the silane-modified polymer (P) as used in step 1 of the method of the present invention, are well-known in the art.

It is understood that in the main chain (MC) various structures are possible such as branched or unbranched structures. The average chain lengths of main chains (M) may be adapted arbitrarily in accordance with the particular desired properties.

The preparation of the silane-modified polymer (P) as used in step 1 of the method of the present invention, is well-known in the art and notably described in US 8697815 B2, US 8076401 B2, and US 4962152 A, the whole content of which is herein incorporated by reference. It is further understood that the silane-modified polymer (P) as used in step 1 of the method of the present invention, can be formed "in situ" in the presence of other component(s) of the composition (C) as obtained in step 2 of the method of the present invention.

Typical silane-modified polymers (P) suitable for use in step 1 of the method of the present invention may include, but are not limited to, silane-modified polysiloxanes, silane-modified polysiloxane-urea/urethane copolymers, silane-modified polyurethanes, silane-modified polyureas, silane-modified polyethers, silane-modified polyesters, silane-modified polyacrylates and silane-modified polymethacrylates, silane-modified polycarbonates, silane-modified polystyrenes, silane-modified polyamides, silane-modified polyvinyl esters or silane-modified polyolefins such as, for example, silane-modified polyethylene, silane-modified poly-butadiene, silane-modified ethylene-olefin copolymers and silane-modified styrene-butadiene copolymers, or a mixture of two or more thereof.

Preferably, the silane-modified polymers (P) as used in step 1 of the method of the present invention may be chosen among the group of silane-modified polysiloxanes, silane-modified polyesters, silane-modified polyurethanes, silane-modified polyethers, or mixtures thereof. More preferably, the silane-modified polymers (P) may be selected from silane-modified polyurethanes, silane-modified polyethers or mixtures thereof. Most preferably, the silane-modified polymers (P) are silane-modified polyethers.

Said silane-modified polysiloxanes, silane-modified polyurethanes and silane-modified polyethers are known to those skilled in the art.

Non limitative examples of commercially available silane-modified polysiloxanes suitable for use in step 1 of the method of the present invention include: Polymer OM 53, Polymer OM 23, Polymer OM 5 and Polymer OM 1 from Evonik Industries.

Non limitative examples of commercially available silane-modified polyurethanes, silane-modified polyethers, or mixtures thereof, suitable for use in step 1 of the method of the present invention include: the hybrid polymers Polymer ST 61, Polymer ST 75, Polymer ST 77, Polymer ST XP AG 48 from Evonik Hanse GmbH , the Desmoseal® prepolymers S XP 2662, XP 2458, XP 2636, XP 2749 from Covestro AG, and SPUR⁺ 1010LM, SPUR⁺ 1050MM, SPUR⁺ 1015LM, SPUR⁺ 3100HM, SPUR⁺ 3200MM from Momentive™ or the TEGOPAC® products, such as TEGOPAC® BOND 150, TEGOPAC® BOND 250 and TEGOPAC® SEAL 100 Evonik Hanse GmbH, the hybrid Geniosil® polymers Geniosil® STP-E10,

Geniosil® STP-E15, Geniosil® STP-E30, Geniosil® STP-E35, Geniosil® XB502, Geniosil® WP1, Geniosil® WP2 from Wacker Chemie GmbH, the Kaneka MS Polymer™ SAT 010, MS Polymer™ S203H, MS Polymer™ S303H, MS Polymer™ SAX 350, MS Polymer™ SAX 400, MS Polymer™ S227, from the Kaneka Corporation and under the trade names Excestar® S2410, Excestar® S2420, Excestar® S3430, Excestar® S3630, Excestar® W2450 and Excestar® MSX931 from the company Asahi Glass Co., Ltd., or mixtures of two or more thereof.

Non limitative examples of commercially available silane -modified polyacrylates or mixtures thereof with silane-modified polyethers, suitable for use in step 1 of the method of the present invention include: MS Polymer™ MAX951, MS Silyl™ MA Polymers MA850, MA451, MA 480, MA490, and XMAP™ Polymers SA100S, SA110S, SA310S, OR100S from the Kaneka Corporation.

Preferably, when the silane-modified polymer (P) as used in step 1, is selected from a silane-modified polyether, a silane-modified polyurethane, a silane-modified polyacrylate, or mixtures of two or more thereof, the molecular weight ($M_w$) of said silane-modified polymer (P), is equal to or greater than 400 g/mol, preferably equal to or greater than 1000 g/mol, more preferably equal to or greater than 5000 g/mol, even more preferably equal to or greater than 10000 g/mol. It is further understood that the upper value of the molecular weight ($M_w$) of the silane-modified polymers (P), is not limited but advantageously equal to or less than 150000 g/mol, preferably equal to or less than 100000 g/mol, more preferably equal to or less than 60000 g/mol, even more preferably equal to or less than 40000 g/mol.

Preferably, when the silane-modified polymer (P) as used in step 1, is a silane-modified polysiloxane, the molecular weight ($M_w$) of said silane-modified polymer (P), is equal to or greater than 400 g/mol, preferably equal to or greater than 5000 g/mol, more preferably equal to or greater than 10000 g/mol. It is further understood that the upper value of the molecular weight ($M_w$) of the silane-modified polymers (P), is not limited but advantageously equal to or less than 300000 g/mol, preferably equal to or less than 100000 g/mol, more preferably equal to or less than 80000 g/mol.

The applicants prefer to use a GPC apparatus to determine molecular weights ($M_w$). Preferably, the GPC/SEC apparatus which is part of the Agilent 1200 Infinity Series LC is used, equipped with a 1200 Series isocratic pump, a standard auto sampler for volumes between 0.1 and 100 microliter, a SECcurity GPC column oven TCC6000, the 1200 Series Variable Wavelength UV detector, SECcurity 2 channel online degasser for degassing the eluent, the WinGPC Unity Software for peak integration and a GPC analytical column set consisting of the following columns in series: 2 x GPC columns PSS SDV analytical, 3 μm, 100 A, 300 x 8.0 mm followed by 2 x GPC columns PSS SDV analytical,3 μm, 1000 A, 300 x 8.0 mm. The pump is preferably set for a flow of 1.000 (one) ml/minute, with tetrahydrofuran (THF) as the eluent. The UV detector is preferably set for a 254 nm wavelength. Further preferred settings include an injection volume of 25 microliter, a column temperature of 30°C. Preferably, the samples are prepared by dissolving them in a diluent resulting in a sample concentration of approximately 4 microgram/microliter. The preferred diluent is tetrahydrofuran (THF), 99.9%, extra pure, anhydrous, stabilized with butylhydroxytoluene (BHT) obtained from Acros, and Toluene, 99.85%, Extra Dried over Molecular Sieve also obtained from Acros. The toluene serves as an internal flow marker. The sample is preferably given at least 30 minutes to allow complete dissolution in the sample diluent. It is subsequently filtered over a 25 mm polytetrafluoroethylene (PTFE) filter with a 0.2 micrometer pore size, in order to remove any non-soluble material which may foul or block the GPC apparatus. During this sample preparation, contact with water or with atmospheric moisture should be avoided as much as possible, as it may influence the outcome of the measurement. It is known to the skilled person that the primary information obtained from the GPC UV detector is not the molecular weight, but the apparent concentration at a certain elution volume. When one is interested in determining molecular weight distributions, calibration of the GPC is required, which is based on assigning the elution volume to a certain molecular weight. The most common method for this calibration, which is preferred by the applicant, is the method that uses molecular weight standards with a narrow molecular weight distribution, e.g. polystyrene standards such as the 'ReadyCal PS' series, available from the company PSS in Germany. The elution volumes of the standards are then measured and plotted against the logarithm of the molecular weight at the peak maximum of each analytical standard. A proper fit function which appropriately describes the shape of the calibration curve has also to be chosen. Using this fit function, the molecular weight distribution (relative to polystyrene) and their respective molecular weight averages, i.e., $M_n$ and $M_w$, may then be calculated.

In a preferred embodiment of the method of the present invention, the weight percent of the silane-modified polymer (P) as used in step 1, relative to the total weight of the composition (C), is advantageously equal to or greater than 5 wt.%, preferably equal to or greater than 10 wt.%, more preferably equal to or greater than 15 wt.%.

It is further understood that, the weight percent of the silane-modified polymer (P), relative to the total weight of the composition (C), is advantageously equal to or less than 99 wt.%, preferably equal to or less than 90 wt.%, more preferably equal to or less than 85 wt.%, even more preferably equal to or less than 75 wt.%, even more preferably equal to or less than 70 wt.%, most preferably equal to or less than 65 wt.%.

## HYDROPHOBIC FUMED SILICA (S)

In step 1 of the method of the present invention use is made of at least one hydrophobic fumed silica (S) having a BET surface area of at least 50 $m^2/g$.

As said, the hydrophobic fumed silicas (S) as used in step 1 of the present invention have a BET surface area of at least 50 $m^2/g$. The BET surface area may be determined according to standard measuring methods such as DIN ISO 9277, DIN 66131, DIN 66132, EN ISO 18757. Preferably, the standard method used to determine the BET surface area of the hydrophobic fumed silicas (S) is the standard DIN 66131.

Preferably, the BET surface area of the hydrophobic fumed silica (S), as used in step 1 of the method of the present invention, is at least 75 $m^2/g$, more preferably at least 100 $m^2/g$, even more preferably at least 125 $m^2/g$, even more preferably at least 150 $m^2/g$, most preferably at least 175 $m^2/g$.

It is further understood that the upper value of the BET surface area of the hydrophobic fumed silica (S) is not particularly limited, but advantageously is equal to or less than 500 $m^2/g$, preferably equal to or less than 450 $m^2/g$, more preferably equal to or less than 400 $m^2/g$, even more preferably equal to or less than 350 $m^2/g$, even more preferably equal to or less than 300 $m^2/g$, most preferably equal to or less than 275 $m^2/g$.

Good results were obtained when BET surface area of the hydrophobic fumed silica (S), as used in step 1 of the method of the present invention was between 100 - 300 $m^2/g$.

The hydrophobic fumed silicas (S) used in the present invention are produced by treating hydrophilic fumed silicas with a hydrophobizing agent [hydrophobizing agent (HA), herein after]. The surface of the silica is chemically modified in the process, i.e., the hydrophobizing agent is connected to the silica by chemical bonds thereby forming a hydrophobic silica (S).

According to the present invention, the hydrophobizing agents (HA) are octamethylcyclotetrasiloxane or alkylsilanes, whereby alkylsilanes are chosen from octyltrialkoxysilanes or hexyltrialkoxysilanes. Most preferably, the hydrophobizing agent (HA) is octamethylcyclotetrasiloxane.

The inventors have surprisingly found that the tack value T of the composition (C) as obtained in step 2, according to the method of the present invention can be tuned over a broad range by the careful selection of a specific hydrophobic fumed silica (S) which was prepared with a certain type of hydrophobizing agent (HA), as exemplified in the experimental section.

Commercially available examples of hydrophobic fumed silicas (S), suitable for use in step 1 of the method of the present invention, which were prepared by using the hydrophobizing agent (HA) octamethylcyclotetrasiloxane include: Aerosil® R104, Aerosil® R106 from Evonik industries.

Commercially available examples of hydrophobic fumed silicas (S), suitable for use in step 1 of the method of the present invention, which were prepared by using a hydrophobizing agent (HA) selected from octyltrialkoxysilanes includes Aerosil® R805 from Evonik industries.

According to the present invention, the weight percent of the hydrophobic fumed silica (S) as used in step 1, relative to the total weight of the composition (C) as obtained in step 2, is equal to or greater than 10 wt.%.

It is further understood that, the weight percent of the hydrophobic fumed silica (S), relative to the total weight of the composition (C), is advantageously equal to or less than 30 wt.%, preferably equal to or less than 20 wt.%, more preferably equal to or less than 15 wt.%.

Good results were obtained when the weight percent of the hydrophobic fumed silica (S), relative to the total weight of the composition (C) is between 5-20 wt.%.

**MIXTURE (M)**

In step 1 of the method of the present invention, the at least one silane-modified polymer (P) having at least one silane group of general formula (I), as described above, is mixed with at least one hydrophobic fumed silica (S) having a BET surface area of at least 50 $m^2/g$, as described above, so as to obtain a mixture (M), wherein said mixture (M) has a tack value $T_0$, measured in accordance with the rheological tack test method, equal to or less than 1000 Pa.

In an advantageous embodiment of the method of the present invention, the mixture (M) as obtained in step 1, has a tack value $T_0$, measured in accordance with the tack test method, equal to or less than 1000 Pa, preferably equal to or less than 750 Pa, more preferably equal to or lower than 500 Pa, even more preferably equal to or lower than 250 Pa, even more preferably equal to or lower than 100 Pa, even more preferably equal to or lower than 50 Pa, most preferably equal to or lower than 10 Pa.

It is further understood when the mixture (M) did not exhibit any tack at all or the tack was too low to measure, a tack value of 0 Pa was assigned.

In order to objectively quantify the tack values, in the context of the present invention, the tack $T_0$ and T may be determined using the tack test method which is described in detail in the experimental section. The tack value T and $T_0$ is determined by an oscillatory rheological measurement wherein a sinusoidal stress deformation is applied and the resultant strain response is measured using a HR-2 Discovery Hybrid Rheometer of the TA Instruments company or an equivalent which is known to those skilled in the art.

Without being bound to this theory, the inventors have found that the advantage of using an oscillatory rheological measurement lies in the fact that the sample might not be destroyed during the measurement and thereby valid results may

be obtained, in contrast to rotational rheological measurements where the samples often may show a tendency to deformation and/or to tearing.

The intimate admixing of the at least one silane-modified polymer (P), as detailed above, with the at least one hydrophobic fumed silica (S) having a BET surface area of at least 50 $g/m^2$, as detailed above, in step 1 of the method according to the present invention may be performed by a variety of conventional mixing techniques known to those skilled in the art.

A low shear mixing technique is preferred. The inventors have surprisingly found that when the mixing is performed at too high shear forces, the tack value and the viscosity of the mixture decrease. One skilled in the art can make appropriate decisions and/or experimentally determine appropriate mixing conditions whereby the mixing is performed at low shear forces.

Typically, the mixing of the at least one silane-modified polymer (P), as detailed above, with the at least one hydrophobic fumed silica (S), as detailed above, is carried out by using static mixers, ribbon blenders, V blenders, continuous processors, cone screw blenders, screw blenders, double cone blenders, double planetary mixers, dissolver mixers, high viscosity mixers, counter-rotating mixers, double and triple shaft mixers, vacuum mixers, dispersion mixers, paddle mixers, jet mixers, mobile mixers, drum blenders, intermix mixers, planetary mixers, high intensity mixers or dual asymmetric centrifugal mixers such as notably SpeedMixer™ type mixers, and the like so as to obtain a physical mixture.

When a dual asymmetric centrifugal mixer, such as a SpeedMixer™, is used, the mixing speed as used in step 1 of the method of the present invention, is advantageously equal to or less than 5000 rpm, more preferably equal to or less than 4000 rpm, even more preferably equal to or less than 3000 rpm, most preferably equal to or less than 2700 rpm. It is further understood, that the lower value of the mixing speed as used in step 1, is not particularly limited but advantageously is equal to or greater than 500 rpm, preferably equal to or greater than 1000 rpm, more preferably equal to or greater than 1500 rpm, even more preferably equal to or greater than 2000 rpm, most preferably equal to or greater than 2500 rpm. Good results were obtained when the mixing speed as used in step 1 is between 2500 and 2700 rpm.

When a dual asymmetric centrifugal mixer, such as a SpeedMixer™, is used, the mixing time as used in step 1 of the method of the present invention, is advantageously equal to or less than 100 seconds, more preferably equal to or less than 50 seconds, most preferably equal to or less than 40 seconds. It is further understood, that the lower value of the mixing time as used in step 1, is not particularly limited but advantageously is equal to or greater than 5 seconds, preferably equal to or greater than 15 seconds, more preferably equal to or greater than 25 seconds. Good results were obtained when the mixing time as used in step 1 is between 25 and 40 seconds.

## RHEOLOGY MODIFIER (R)

The inventors have surprisingly found that by first preparing in a step 1, a mixture (M) having a relatively low tack value $T_0$ of equal to or less than 1000 Pa to which in step 2, at least one rheology modifier (R), is added, the tack value increases to a high tack value T which is fulfilling the requirements of:

$$T \geq \frac{K\left(\frac{T_0}{260\ \text{Pa}}\right)^{11} + L}{1 + \left(\frac{T_0}{260\ \text{Pa}}\right)^{11}}$$

Despite the fact that the tack value increases enormously, the method of the present invention does not cause any unwanted changes in the other properties of the high tack adhesive and/or sealant compositions such as adhesion and mechanical properties.

Thus, in step 2 of the method of the present invention use is made of at least one rheology modifier of general formula (II) [rheology modifier (R), herein after],

$$X\text{-}B\text{-}SiR^3_c(OR^4)_{3-c} \qquad \text{formula (II)}$$

wherein:

- X is independently selected from the group consisting of:

    - $SR^5$ wherein $R^5$ is independently selected from hydrogen, $C_{1-10}$ alkyl, $C_{2-10}$ alkenyl, $C_{1-10}$ cycloalkyl, $C_{6-10}$ aryl group or - (C=O)-$R^6$ wherein $R^6$ is a $C_{1-10}$ alkyl, $C_{2-10}$ alkenyl or $C_{6-10}$ aryl group,
    - $NR^7R^8$ wherein $R^7$ and $R^8$ are each independently selected from the group consisting of hydrogen; $C_{1-10}$ alkyl, $C_{2-10}$ alkenyl, $C_{1-10}$ cycloalkyl, $C_{6-10}$ aryl or $C_{6-10}$ aralkyl wherein said alkyl, alkenyl, cycloalkyl aryl and aralkyl are

optionally substituted by hydroxyl, $SiR^{11}_b(OR^{12})_{3-b}$, or $NR^{13}R^{14}$; or-(C=O)-$NR^9R^{10}$; and wherein $R^9$ and $R^{10}$ are each independently selected from the group consisting of hydrogen, $C_{1-10}$ alkyl, $C_{2-10}$ alkenyl, $C_{1-10}$ cycloalkyl, $C_{6-10}$ aryl or $C_{6-10}$ aralkyl; and wherein $R^{11}$ and $R^{12}$ are each independently selected from the group consisting of a $C_{1-10}$ alkyl, $C_{2-10}$ alkenyl, $C_{1-10}$ cycloalkyl or $C_{6-10}$ aryl group; and wherein $R^{13}$ and $R^{14}$ are each independently selected from the group consisting of hydrogen, $C_{1-10}$ alkyl, $C_{2-10}$ alkenyl, $C_{1-10}$ cycloalkyl, $C_{6-10}$ aryl or $C_{6-10}$ aralkyl and each optional alkyl, alkenyl, cycloalkyl aryl and aralkyl is further optionally substituted by a hydroxyl or amino group,

- $OR^{15}$ wherein $R^{15}$ is independently selected from hydrogen, $C_{1-10}$ alkyl, $C_{2-10}$ alkenyl, $C_{1-10}$ cycloalkyl, $C_{6-10}$ aryl or $C_{6-10}$ aralkyl wherein said alkyl, alkenyl, cycloalkyl aryl and aralkyl are optionally substituted by one or more substituents selected from OH, $NR^{16}R^{17}$ wherein $R^{16}$ and $R^{17}$ either individually each represents a hydrogen or $C_{1-12}$ alkyl which optionally comprises heteroatoms in the form of ether oxygen, thioether sulfur or tertiary amine nitrogen, or $R^{16}$ and $R^{17}$ together represent a divalent $C_{2-10}$ aliphatic group, which optionally comprises heteroatoms in the form of ether oxygen, thioether sulfur or tertiary amine nitrogen;

- B is a divalent linker group independently selected from the group consisting of a divalent saturated $C_{1-20}$ aliphatic group, a divalent unsaturated $C_{2-20}$ aliphatic group, a divalent $C_{6-20}$ aromatic group or a divalent $C_{6-20}$ aralkylene group;
- $R^3$ is a $C_{1-10}$ alkyl, $C_{2-10}$ alkenyl, $C_{1-10}$ cycloalkyl or $C_{6-10}$ aryl group wherein said alkyl, alkenyl, cycloalkyl and aryl, are optionally substituted with a halogen atom, an aryl group or an aralkyl group;
- $R^4$ is a $C_{1-20}$ alkyl or $C_{6-10}$ aryl group wherein said alkyl and aryl, are optionally substituted with a halogen atom, an aryl group or an aralkyl group;
- c is an integer ranging from 0 to 3.

Preferably, B in the rheology modifier (R), as used in step 2, is a divalent linker group independently selected from the group consisting of a divalent saturated $C_{1-10}$ aliphatic group, a divalent unsaturated $C_{2-10}$ aliphatic group or a divalent $C_{6-10}$ aromatic group. More preferably, B is a divalent linker group $-(C(R')(R''))_n-$ wherein n is an integer ranging from 1 to 10, preferably 1 to 5, more preferably 1 to 3, and wherein R' and R", independently from each other and at each occurrence, may be selected from hydrogen, $C_{1-10}$ alkyl or $C_{2-10}$ alkenyl wherein said alkyl and alkenyl, are optionally substituted with a halogen atom, an aryl group or an aralkyl group; preferably each of R' and R", may be selected from hydrogen or an $C_{1-4}$ alkyl. Most preferably, B is a divalent linker group $-(CH_2)_n-$ wherein n is an integer ranging from 1 to 5, more preferably 1 to 3.

Preferably, each of $R^3$ in the rheology modifier (R) is independently selected from a $C_{1-10}$ alkyl, $C_{2-10}$ alkenyl or $C_{6-10}$ aryl group. More preferably, each of $R^3$ is independently selected from $C_{1-5}$ alkyl, $C_{2-5}$ alkenyl or $C_{6-8}$ aryl group. Even more preferably, each of $R^3$ is a $C_{1-5}$ alkyl group such as methyl, ethyl, propyl, isopropyl, butyl, isobutyl, tert-butyl, pentyl, and the like. Most preferably, each of $R^3$ is a methyl or ethyl group.

Preferably, each of $R^4$ in the rheology modifier (R) is independently selected from a $C_{1-10}$ alkyl or $C_{6-10}$ aryl group. More preferably, each of $R^4$ is a $C_{1-5}$ alkyl such as methyl, ethyl, propyl, isopropyl, butyl, isobutyl, tert-butyl, pentyl, and the like. Most preferably, $R^4$ is a methyl or ethyl group.

Preferably, c in the rheology modifier (R) is an integer ranging from 0 to 1, more preferably c is 0.

It is known that the rheology modifiers (R) of general formula (II) can also already exist in partially or completely hydrolyzed form. A person skilled in the art knows that when partially or completely hydrolyzed silanes are used, the formation of oligomeric siloxanes, especially dimers and/or trimers, may occur, as these are formed by condensation of hydrolyzed silanes. Thus, oligomeric siloxanes may also be used as compounds (A) in rheology modifier (R) as used in step 2 of the method of the present invention.

For example, suitable oligomeric siloxanes for use in the rheology modifier (R) as used in step 2 of the method of the present invention may be selected from, but are not limited to: hexamethoxydisiloxane, hexaethoxydisoloxane, hexa-n-propoxydisiloxane, octaethoxytrisiloxane, decaethoxytetrasiloxane, gamma-aminopropylsilsesquioxane, and the like.

Non limitative examples of commercially available oligomeric siloxanes suitable for use in the rheology modifier (R) are: Silquest A-1106, Silquest A-1170, Silquest VS-142 manufactured by Momentive™; Dynasylan® 1146, Dynasylan® Hydrosil 1151 manufactured by Evonik, SiSiB® PC1106 manufactured by SiSiB® Silicones, or SIH6175.0 manufactured by Gelest Inc..

In one embodiment of the method of the present invention, the rheology modifier (R) of general formula (II) is a compound chosen among those of formulae (III) or (IV):

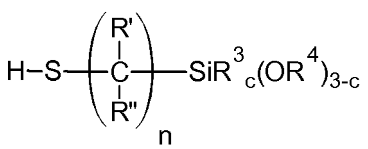

formula (III)

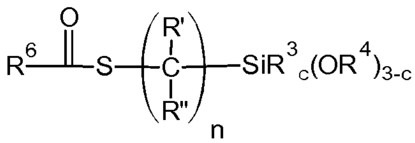

formula (IV)

wherein n is an integer ranging from 1 to 10; c is an integer ranging from 0 to 1, preferably c is 0; wherein $R^3$ is a $C_{1-10}$ alkyl group; $R^4$ is a $C_{1-10}$ alkyl group, preferably $R^4$ is a methyl, ethyl, propyl, isopropyl, butyl, isobutyl or tert-butyl group; and $R^6$ is a $C_{1-10}$ alkyl group; and wherein R' and R", independently from each other and at each occurrence, may be selected from hydrogen, $C_{1-10}$ alkyl or $C_{2-10}$ alkenyl wherein said alkyl and alkenyl, are optionally substituted with a halogen atom, an aryl group or an aralkyl group; preferably each of R' and R", are selected from hydrogen or an $C_{1-4}$ alkyl.

Among rheology modifiers (R) of formula (III) suitable for use in the composition (C) as obtained in step 2 of the method of the present invention mention may be notably made of: 3-mercaptopropylmethyldiethoxy-silane, 18-mercaptooctadecylmethyldiethoxy-silane, 4-mercaptobutyltriethoxy-silane, 4-mercaptobutyltrimethoxy-silane, 4-mercaptobutyltripropoxy-silane, 3-octanoylthio-1-propyltriethoxy-silane and the like, and mixtures thereof.

Among rheology modifiers (R) of formula (IV) suitable for use in the composition (C) as obtained in step 2 of the method of the present invention mention may be notably made of: methyldiethoxysilylmethyl-thioacetate, methyldimethoxysilylmethylthioacetate, methyldiisopropoxy-silylmethylthioacetate, dimethylethoxysilylmethylthioacetate, dimethylmethoxy-silylmethylthioacetate, dimethylisopropoxysilylmethylthioacetate, 2-(methyldiethoxysilyl)-1-ethylthioacetate, 2-(methyldiiso-propoxysilyl)-1-ethylthioacetate, 2-(dimethylethoxysilyl)-1-ethyl-thioacetate, 2-(dimethylmethoxysilyl)-1-ethylthioacetate, 2-(dimethyliso-propoxysilyl)-1-ethylthioacetate, 3-methyldiethoxysilyl-1-propylthioacetate, 3-methyldimethoxysilyl-1-propylthioacetate, 3-methyldiisopropoxysilyl-1-propyl-thioacetate, 6-triethoxysilyl-1-hexylthioacetate, 1-triethoxysilyl-5-hexylthioacetate, 1-triethoxysilyl-2-butylthioacetate, 1-triethoxysilyl-3-butylthioacetate, 1-triethoxysilyl-3-methyl-2-butylthioacetate, 1-triethoxysilyl-3-methyl-3-butylthioacetate, 6-triethoxysilyl-1-hexyl thioacetate, 1-triethoxysilyl-5-hexylthioacetate, 8-triethoxysilyl-1-octylthioacetate, 1-triethoxysilyl-7-octylthioacetate, 6-triethoxysilyl-1-hexylthioacetate, 1-triethoxysilyl-5-octylthioacetate, 8-trimethoxysilyl-1-octylthioacetate, 1-trimethoxysilyl-7-octylthioacetate, 10-triethoxysilyl-10-decylthioacetate, 1-triethoxysilyl-9-decylthioacetate, 1-triethoxysilyl-2-butylthioacetate, 3-trimethoxysilyl-1-propylthiooctanoate, 3-triethoxysilyl-1-propylthiooctanoate and the like and mixtures thereof.

Preferably, the rheology modifier (R) of formula (III) is a compound chosen among those of formula (III-a):

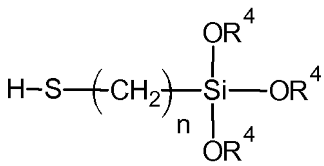

formula (III-a)

wherein n is an integer ranging from 1 to 3; and wherein $R^4$ is a $C_{1-3}$ alkyl group.

Among rheology modifiers (R) of formula (III-a) suitable for use in the composition (C) as obtained in step 2 of the method of the present invention mention may be notably made of: 1-mercaptomethyl-triethoxysilane, 2-mercaptoethyltriethoxysilane, 3-mercaptopropyltriethoxy-silane, 3-mercaptopropyltrimethoxy-silane, 2-mercaptoethyltripropoxy-silane, and the like and mixtures thereof.

Non limitative examples of commercially available rheology modifiers (R) of formula (III-a) suitable for use in the composition (C) as obtained in step 2 of the method of the present invention include: Silquest A-189, A-1891 as manufactured by Momentive™, Dynasylan® MTMO as manufactured by Evonik Industries, KBM-803 manufactured by Shin-Etsu.

Preferably, the rheology modifier (R) of formula (IV) is a compound chosen among those of formula (IV-a):

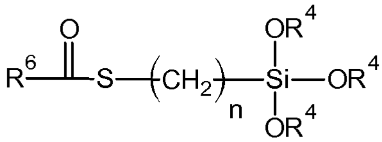

formula (IV-a)

wherein $R^6$ has the same meaning as defined above for formulae (III) and (IV); wherein n is an integer ranging from 1 to 3; and wherein $R^4$ is a $C_{1-3}$ alkyl group.

Among rheology modifiers (R) of formula (IV-a) suitable for use in the composition (C) as obtained in step 2 of the method of the present invention mention may be notably made of: 2-triethoxysilyl-1-ethylthioacetate, 2-trimethoxysilyl-1-ethylthioacetate, 3-trimethoxysilyl-1-propylthioacetate, triethoxysilylmethylthioacetate, trimethoxysilylmethylthioacetate, triisopropoxy-silylmethylthioacetate, 2-triiso-propoxysilyl-1-ethylthioacetate, 3-triethoxysilyl-1-propylthioacetate, 3-triiso-propoxysilyl-1-propylthioacetate, and the like and mixtures thereof.

Non limitative examples of commercially available rheology modifiers (R) of formula (IV) suitable for use in the composition (C) as used in step 2 of the method of the present invention include: NXT® silanes such as A-link 599 as manufactured by Momentive™.

In another embodiment of the method of the present invention, the rheology modifier (R) of general formula (II) is a compound chosen among those of formulae (V) or (VI):

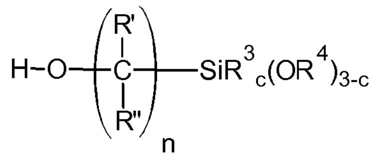

formula (V)

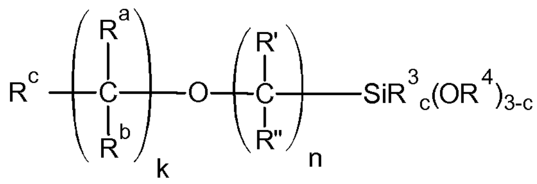

formula (VI)

wherein n, c, R', R", $R^3$, $R^4$ have the same meaning as defined above for formulae (III) to (IV); wherein k is an integer ranging from 1 to 10; and wherein each of $R^a$, $R^b$ and $R^c$ are each independently selected from hydrogen, OH or $NR^{16}R^{17}$ wherein $R^{16}$ and $R^{17}$ either individually each represent a hydrogen or a $C_{1-6}$ alkyl which optionally comprises heteroatoms in the form of ether oxygen, thioether sulfur or tertiary amine nitrogen, more preferably each of $R^a$, $R^b$ and $R^c$ are each independently selected from hydrogen or OH.

Preferably, the rheology modifier (R) of formula (V) is a compound chosen among those of formula (V-a):

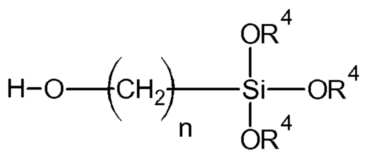

formula (V-a)

wherein n is an integer ranging from 1 to 3; and wherein $R^4$ is a $C_{1-3}$ alkyl group.

Among rheology modifiers (R) of formula (V-a) suitable for use in the composition (C) as used in step 2 of the method of the present invention mention may be notably made of: hydroxymethyltriethoxysilane, hydroxyethyltriethoxysilane, hydroxymethyltrimethoxysilane, hydroxyethyltrimethoxysilane and the like and mixtures thereof.

Preferably, the rheology modifier (R) of formula (VI) is a compound chosen among those of formula (VI-a):

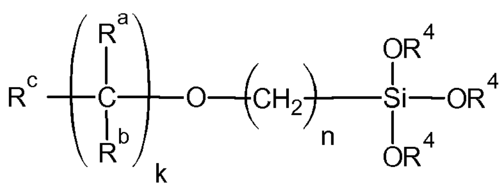

formula (VI-a)

wherein k, $R^a$, $R^b$ and $R^c$ have the same meaning as defined above for formulae (V) to (VI); wherein n is an integer ranging from 1 to 3; and wherein $R^4$ is a $C_{1-3}$ alkyl group.

In a preferred embodiment of the method of the present invention the rheology modifier (R) of general formula (II), is a compound chosen among those of formulae (VII) to (IX):

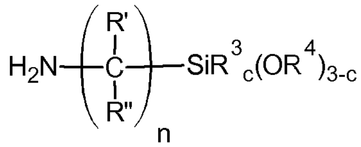

formula (VII)

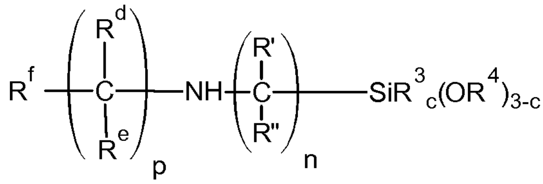

formula (VIII)

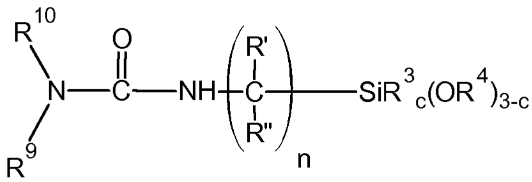

formula (IX)

wherein n, c, R', R", $R^3$, $R^4$ have the same meaning as defined above for formulae (III) to (IV); and wherein p is an integer ranging from 1 to 10; and wherein $R^9$ and $R^{10}$ are each independently selected from hydrogen or $C_{1-10}$ alkyl; and each of $R^d$, $R^e$ and $R^f$ are each independently selected from hydrogen, OH or $NR^{13}R^{14}$ wherein $R^{13}$ and $R^{14}$ are each independently selected from hydrogen or $C_{1-10}$ alkyl wherein said alkyl is optionally substituted by an amino group.

Among rheology modifiers (R) of formula (VII) suitable for use in the composition (C) as obtained in step 2 of the method of the present invention mention may be notably made of: 1-aminomethyldimethoxymethylsilane, 1-aminomethyldiethoxymethylsilane, 1-aminomethyldiethoxyethylsilane, 2-aminoethyldimethoxymethylsilane, 2-aminoethyldiethoxymethylsilane, 2-aminoethyldiethoxyethylsilane, 3-aminopropyldimethoxymethylsilane, 3-aminopropyldiethoxymethylsilane, 3-aminopropyldiethoxyethylsilane, 4-aminobutyldimethoxymethylsilane, 4-aminobutyldiethoxymethylsilane, 4-aminobutyldiethoxyethylsilane, 4-aminobutyltrimethoxysilane, 4-aminobutyltriethoxysilane, 4-aminobutyltripropoxysilane, 4-aminobutyltriisopropoxysilane, 5-aminopentyltrimethoxysilane, 5-aminopentyltriethoxysilane, 5-aminopentltripropoxysilane, 5-aminopentyltriisopropoxysilane, 6-aminohexyltrimethoxysilane, 6-aminohexyltriethoxysilane, 6-aminohexyltripropoxysilane, 6-aminohexyltriisopropoxysilane, and the like and mixtures thereof.

Among rheology modifiers (R) of formula (VIII) suitable for use in the composition (C) as used in step 2 of the method of the present invention mention may be notably made of: N-(2-aminoethyl)-3-aminopropylmethyldimethoxysilane, N-butyl-3-aminopropylmethyldimethoxysilane, N-(2-aminoethyl)-3-aminopropyl-methyldiethoxysilane, N-butyl-3-aminopropylmethyldiethoxysilane, N-(2-aminoethyl)-3-aminopropyl-ethyldimethoxysilane, N-butyl-3-aminopropylethyldimethoxysilane, N-(2-aminoethyl)-3-aminopropyl-ethyldiethoxysilane, N-butyl-3-aminopropyl-ethyldiethoxysilane, N-(2-aminoethyl)-4-aminobutyltrimethoxysilane, 3-(2-aminomethylamino)-butyltriethoxysilane, n-butyl-4-aminobutyltrimethoxysilane, n-butyl-4-aminobutyltriethoxysilane and the like and mixtures thereof.

Among rheology modifiers (R) of formula (IX) suitable for use in the composition (C) as used in step 2 of the method of the present invention mention may be notably made of: 3-ureidopropyldimethoxmethylysilane, 3-ureidopropyldiethoxmethylysilane, 3-ureidopropyldiethoxethylysilane, 3-ureidopropyldimethoxyethylysilane, 4-ureidobutyltrimethoxysilane, 4-ureidobutyltriethoxysilane and the like and mixtures thereof.

In a more preferred embodiment of the method of the present invention the rheology modifier (R) of general formula (II), is a compound chosen among those of formulae (VII) and (VIII):

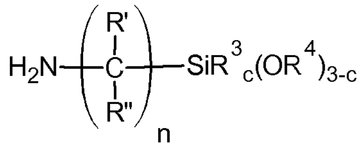

formula (VII)

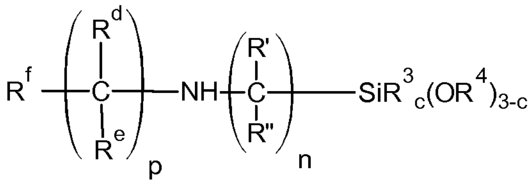

formula (VIII)

wherein n, p, c, R', R", $R^3$, $R^4$, $R^9$, $R^{10}$, $R^d$, $R^e$ and $R^f$ have the same meaning as defined above for formulae (VII) to (IX).

Preferably, the rheology modifier (R) of formula (VII) is a compound chosen among those of formula (VI-a):

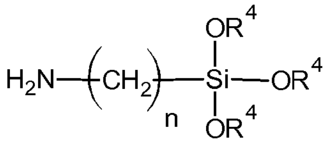

formula (VII-a)

wherein n is an integer ranging from 1 to 3; and wherein $R^4$ is a $C_{1-3}$ alkyl group.

Among rheology modifiers (R) of formula (VII-a) suitable for use in the composition (C) as used in step 2 of the method of the present invention mention may be notably made of: 1-aminomethyltrimethoxysilane, 1-aminomethyltriethoxysilane, 1-aminomethyltripropoxysilane, 1-aminomethyltriisopropoxysilane, 2-aminoethyltrimethoxysilane, 2-aminoethyltriethoxysilane, 2-aminoethyltripropoxysilane, 2-aminoethyltriisopropoxysilane, 3-aminopropyltrimethoxysilane, 3-aminopropyltriethoxysilane, 3-aminopropyltripropoxysilane, 3-aminopropyltriisopropoxysilane, and the like and mixtures thereof...

Non limitative examples of commercially available rheology modifiers (R) of formula (VII-a) suitable for use in the composition (C) as used in step 2 of the method of the present invention include Silquest A1100, A1101, A1102, A1110 manufactured by Momentive™; Dynasylan® AMMO and AMEO manufactured by Evonik Industries; Geniosil® GF96, GF93 manufactured by Wacker Chemie AG; and KBM-903 and KBE-903 manufactured by Shin-Etsu.

Preferably, the rheology modifier (R) of formula (VIII) is a compound chosen among those of formula (VIII-a):

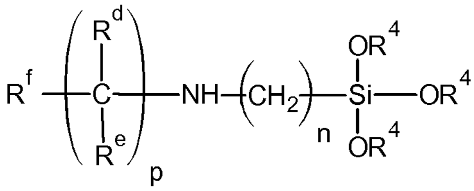

formula (VIII-a)

wherein p, $R^d$, $R^e$, and $R^f$, have the same meaning as defined above for formulae (VIII) to (IX); wherein n is an integer ranging from 1 to 3; and wherein $R^4$ is a $C_{1-3}$ alkyl group.

Among rheology modifiers (R) of formula (VIII-a) suitable for use in the composition (C) as used in step 2 of the method of the present invention mention may be notably made of: N-(2-aminoethyl)-3-aminopropyltrimethoxysilane, 3-(2-aminomethylamino)-propyltriethoxysilane, n-butyl-3-aminopropyltrimethoxysilane, n-butyl-3-aminopropyltriethoxysilane, and the like and mixtures thereof.

Non limitative examples of commercially available rheology modifiers (R) of formula (VIII-a) suitable for use in the composition (C) as used in step 2 of the method of the present invention include: Silquest A1120, A1130 and A-link 15 as manufactured by Momentive™; Dynasylan® TRIAMO, DAMO and 1189 manufactured by Evonik Industries; Geniosil® GF9, GF91, GF92 manufactured by Wacker.Chemie AG; and KMB-603 manufactured by Shin-Etsu.

Preferably, the rheology modifier (R) of formula (IX) is a compound chosen among those of formula (IX-a):

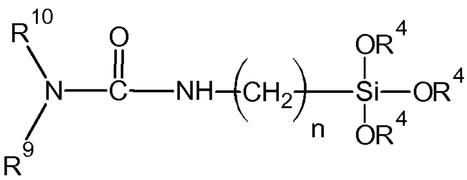

formula (IX-a)

wherein $R^9$ and $R^{10}$ have the same meaning as defined above for formulae (VIII) to (IX); wherein n is an integer ranging

from 1 to 3; and wherein $R^4$ is a $C_{1-3}$ alkyl group.

Among rheology modifiers (R) of formula (IX-a) suitable for use in the composition (C) as used in step 2 of the method of the present invention mention may be notably made of: 3-ureidopropyltrimethoxysilane, 3-ureidopropyltriethoxysilane, and the like and mixtures thereof.

Non limitative examples of commercially available rheology modifiers (R) of formula (IX-a) suitable for use in the composition (C) as used in step 2 of the method of the present invention include: Silquest 1524 manufactured by Momentive™; Dynasylan® 2201 EQ manufactured by Evonik Industries; and KBE-585 manufactured by Shin-Etsu.

The inventors have surprisingly found that the tack value T, according to the method of the present invention can be tuned over a broad range by the careful selection of a certain rheology modifier (R) as illustrated in the experimental section

In other words, thereby showing the versatility of the method according to the present invention.

In a preferred embodiment of the method of the present invention, the weight percent of the rheology modifier (R) as used in step 2, relative to the total weight of the composition (C) as obtained in step 2, is advantageously equal to or greater than 0.1 wt.%, preferably equal to or greater than 0.5 wt.%, more preferably equal to or greater than 0.7 wt.%.

It is further understood that, the weight percent of the rheology modifier (R), relative to the total weight of the composition (C), is advantageously equal to or less than 10 wt.%, preferably equal to or less than 5 wt.%, more preferably equal to or less than 3 wt.%, most preferably equal to or less than 2 wt.%.

Good results were obtained when the weight percent of the rheology modifier (R), relative to the total weight of the composition (C) is between 0.5-3 wt.%.

**COMPOSITION (C)**

As said, the present invention provides a method for manufacturing a composition (C) suitable for use as an adhesive and/or sealant wherein said composition (C) as obtained in step 2, has a tack value T, measured in accordance with the tack test, wherein:

$$T \geq \frac{K\left(\frac{T_0}{260\ \mathrm{Pa}}\right)^{11} + L}{1 + \left(\frac{T_0}{260\ \mathrm{Pa}}\right)^{11}} \qquad \text{(equation 1)}$$

and K is equal to or greater than 6000 Pa,
and L is equal to or greater than 1000 Pa.

According to certain embodiments of the method of the present invention, the value K in the equation 1 (eq. 1) for the tack value T of the composition (C) as obtained in step 2, is advantageously equal to or greater than 7000 Pa, preferably equal to or greater than 8000 Pa, more preferably equal to or greater than 9000 Pa, even more preferably equal to or greater than 10000 Pa, even more preferably equal to or greater than 11000 Pa, most preferably equal to or greater than 12000 Pa. It is further understood that, the upper limit of the value K in the equation 1 (eq. 1) for the tack value T of the composition (C), is not limited but advantageously is equal to or less than 30000 Pa, preferably equal to or less than 25000 Pa, more preferably equal to or less than 20000 Pa.

According to certain embodiments of the method of the present invention, the value L in the equation 1 (eq. 1) for the tack value T of the composition (C) as obtained in step 2, is advantageously equal to or greater than 1500 Pa, preferably equal to or greater than 3000 Pa, more preferably equal to or greater than 6000 Pa, even more preferably equal to or greater than 7000 Pa, even more preferably equal to or greater than 8000 Pa, even more preferably equal to or greater than 9000 Pa, even more preferably equal to or greater than 10000 Pa, even more preferably equal to or greater than 11000 Pa, most preferably equal to or greater than 12000 Pa. It is further understood that, the upper limit of the value L in the equation 1 (eq. 1) for the tack value T of the composition (C), is not limited but advantageously is equal to or less than 30000 Pa, preferably equal to or less than 25000 Pa, more preferably equal to or less than 20000 Pa.

The intimate admixing of the mixture (M), as detailed above, with at least one rheology modifier (R), as detailed above, may be performed by a variety of conventional mixing techniques known to those skilled in the art.

A low shear mixing technique is preferred. The inventors have surprisingly found that when the mixing is performed at too high shear forces, the tack value and the viscosity of the mixture decrease. One skilled in the art can make appropriate decisions and/or experimentally determine appropriate mixing conditions whereby the mixing is performed at low shear forces.

Typically, the mixing of the mixture (M), as detailed above, with the at least one rheology modifier (R), as detailed above, is carried out by using static mixers, ribbon blenders, V blenders, continuous processors, cone screw blenders,

screw blenders, double cone blenders, double planetary mixers, dissolver mixers, high viscosity mixers, counter-rotating mixers, double and triple shaft mixers, vacuum mixers, dispersion mixers, paddle mixers, jet mixers, mobile mixers, drum blenders, intermix mixers, planetary mixers, high intensity mixers or dual asymmetric centrifugal mixers such as notably SpeedMixer™ type mixers, and the like so as to obtain a physical mixture.

When a dual asymmetric centrifugal mixer, such as a SpeedMixer™, is used, the mixing speed as used in step 1 of the method of the present invention, is advantageously equal to or less than 5000 rpm, more preferably equal to or less than 4000 rpm, even more preferably equal to or less than 3000 rpm, most preferably equal to or less than 2700 rpm. It is further understood, that the lower value of the mixing speed as used in step 1, is not particularly limited but advantageously is equal to or greater than 500 rpm, preferably equal to or greater than 1000 rpm, more preferably equal to or greater than 1500 rpm, even more preferably equal to or greater than 2000 rpm, most preferably equal to or greater than 2500 rpm. Good results were obtained when the mixing speed as used in step 1 is between 2500 and 2700 rpm.

When a dual asymmetric centrifugal mixer, such as a SpeedMixer™, is used, the mixing time as used in step 1 of the method of the present invention, is advantageously equal to or less than 100 seconds, more preferably equal to or less than 50 seconds, most preferably equal to or less than 40 seconds. It is further understood, that the lower value of the mixing time as used in step 1, is not particularly limited but advantageously is equal to or greater than 5 seconds, preferably equal to or greater than 15 seconds, more preferably equal to or greater than 25 seconds. Good results were obtained when the mixing time as used in step 1 is between 25 and 40 seconds.

Advantageously, the time between step 1 and step 2 of the method according to the present invention is equal to or less than 15 minutes, more preferably equal to or less than 10 minutes, even more preferably equal to or less than 5 minutes. It is further understood, that the lower value of the time between step 1 and step 2 of the method according to the present invention is not particularly limited.

The order of addition of each component, the mixture (M) and the at least one rheology modifier (R), is not particularly limited in the respective composition (C). In general, however, the mixture (M) is added to the mixer first and the rheology modifier (R) is added next.

The inventors have surprisingly found that the initial tack value of an adhesive and/or sealant composition can be drastically increased in step 2 of the manufacturing method, said step 2 comprises mixing the mixture (M) with a rheology modifier (R). The tack value increase from tack value $T_0$ to T only takes place in the final phase (step 2), thus the method of the present invention provides a more practical method for manufacturing an adhesive and/or sealant compositions with a high tack value T. The pumpability of the mixture (M) is not impaired and requires little energy, which then primarily improves the handling of the mixture (M) advantageously. Further, the method according to the present invention is more economical. As said, the tack value increase from tack value $T_0$ to T only takes place in the final phase (step 2), thus there is no need of using specialized equipment to perform the mixing steps. Moreover, to reach said tack value T, there is no need of using organoclay-based rheology controllers and no need of using rheology controllers which are activated by heat.

Another significant advantage of the method of the present invention lies in the fact that it is a versatile method. The method according to the present invention allows to tune the tack value T within a very broad range, at one side through the careful selection of the hydrophobic fumed silica (S), as used in step 1, at the other side, through the careful selection of the rheology modifier (R), as used in step 2.

The tack value T may be measured in accordance with the tack test method, as explained above and as detailed in the experimental section.

According to certain embodiments of the method of the present invention, the tack value T of the composition (C), measured in accordance with the tack test method, and is equal to or greater than 1000 Pa, more preferably equal to or greater than 2500 Pa, even more preferably equal to or greater than 5000 Pa, even more preferably equal to or greater than 6000 Pa, even more preferably equal to or greater than 7000 Pa, even more preferably equal to or greater than 8000 Pa, even more preferably equal to or greater than 9000 Pa, even more preferably equal to or greater than 10000 Pa, even more preferably equal to or greater than 11000 Pa, most preferably equal to or greater than 12000 Pa. It is further understood that, the tack value T of the composition (C), measured in accordance with the tack test method, is not particularly limited but advantageously is equal to or less than 30000 Pa, preferably equal to or less than 25000 Pa, more preferably equal to or less than 20000 Pa.

According to certain embodiments of the method of the present invention, the tack value T of the composition (C) as obtained in step 2 is a high tack value T, measured in accordance with the tack test method, and is equal to or greater than 8500 Pa, more preferably equal to or greater than 9000 Pa, more preferably equal to or greater than 9500 Pa, even more preferably equal to or greater than 10000 Pa, even more preferably equal to or greater than 10500 Pa, even more preferably equal to or greater than 11000 Pa, most preferably equal to or greater than 12000 Pa. It is further understood that when the tack value T is a high tack value T, measured in accordance with the tack test method, the upper limit of the tack value T of the composition (C) as obtained in step 2, is not limited but is advantageously equal to or less than 30000 Pa, preferably equal to or less than 250000 Pa, more preferably equal to or less than 20000 Pa.

According to certain embodiments of the method of the present invention, the tack value T of the composition (C) as obtained in step 2 is a midrange tack value T, measured in accordance with the tack test method, and is equal to or

greater than 1000 Pa, preferably equal to or greater than 2000 Pa, more preferably equal to or greater than 3000 Pa, even more preferably equal to or greater than 4000 Pa, most preferably equal to or greater than 5000 Pa. It is further understood that when the tack value T is a midrange tack value T, measured in accordance with the tack test method, the upper limit of the tack value T of the composition (C) as obtained in step 2, is not limited but is advantageously equal to or less than 12000 Pa, preferably equal to or less than 11000 Pa, more preferably equal to or less than 10000 Pa, even more preferably equal to or less than 9000 Pa, most preferably equal to or less than 8500 Pa.

According to certain embodiments, in any of the steps of the method according to the present invention, at least one plasticizer [plasticizer (PL), herein after] may be added.

Suitable plasticizers (PL), for use in the method of the present invention, are notably described in US 2014/0094553 A1.

Among plasticizers (PL) suitable for use in the method of the present invention, mention may be notably made of: phthalic acid ester compounds such as dibutyl phthalate, diisononyl phthalate (DINP), diheptyl phthalate, di(2-ethylhexyl) phthalate, diisodecyl phthalate (DIDP), and butyl benzyl phthalate; terephthalic acid ester compounds such as bis(2-ethylhexyl)-1,4-benzenedicarboxylate; non-phthalic ester compounds such as 1,2-cyclohexane dicarboxylic acid diisononyl ester, aliphatic polycarboxylic acid ester compounds such as dioctyl adipate, dioctyl sebacate, dibutyl sebacate, diisodecyl succinate, and tributyl acetylcitrate; unsaturated fatty acid ester compounds such as butyl oleate and methyl acetyl ricinoleate; alkyl sulfonic acid phenyl esters; phosphoric acid ester compounds such as tricresyl phosphate and tributyl phosphate; trimellitic acid ester compounds; chlorinated paraffin; hydrocarbon oils such as alkyl diphenyl and partially hydrogenated terphenyl; process oil; and epoxy plasticizers such as epoxidized soybean oil and benzyl epoxystearate. Also, polymer plasticizers may be used as plasticizers (PL) suitable for use in the method of the present invention, such as but not particularly limited to, vinyl polymers obtained by polymerizing vinyl monomers by various methods; esters of polyalkylene glycols, such as diethylene glycol dibenzoate, triethylene glycol dibenzoate, and pentaerythritol ester; polyester plasticizers formed from dibasic acids (e.g. sebacic acid, adipic acid, azelaic acid, phthalic acid) and divalent alcohols (e.g. ethylene glycol, diethylene glycol, triethylene glycol, propylene glycol, dipropylene glycol); polyethers such as polyether polyols (e.g. polyethylene glycol, polypropylene glycol, and polytetramethylene glycol having a number average molecular weight of 500 or more, or even 1000 or more) and derivatives obtained by converting the hydroxyl groups of these polyether polyols into ester groups, ether groups, or the like; polystyrenes such as polystyrene and poly-$\alpha$-methylstyrene; polybutadiene, polybutene, polyisobutylene, butadiene-acrylonitrile, and polychloroprene.

Non limitative examples of commercially available plasticizers (PL) suitable for use in the method of the present invention include: Eastman 168™ from the Eastman Chemical Company, Jayflex™ DINP, Jayflex™ DIUP, Jayflex™ DIDP available from ExxonMobil Chemical, Mesamoll™ available from Lanxess, Hexamoll® DINCH® available from BASF AG, Desmophen® 2060 BD available from Covestro, VORANOL™ available from The DOW® Chemical Company.

Typically, the amount of the plasticizer (PL), when present, is from 1wt.% to 80 wt.%, more preferably from 5 wt.% to 70 wt.%, most preferably from 10 wt.% to 50 wt.%, relative to the total weight of the composition (C).

According to certain embodiments, in any of the steps of the method according to the present invention, at least one catalyst [catalyst (CA), herein after] may be added.

Among catalysts (CA) suitable for use in the method of the present invention, mention may be notably made of: organotin catalysts such as, but not limited to, dibutyltin dilaurate, dibutyltin maleate, dibutyltin diacetate, dibutyltin dioctanoate, dibutyltin acetylacetonate, dibutyltinoxide; orthotitanates or organic titanates such as, but not limited to, diisopropoxy-titaniumbis(ethylacetoacetate), dibutoxy-titanium-bist(ethylacetoacetate), titanium acetylacetonate or dibutoxy-titanium-bisacetylacetonate; or Lewis acid compounds of the transition metals zirconium, hafnium, zinc, boron, aluminum, bismuth.

Non limitative examples of commercially available catalysts (CA) suitable for use in the method of the present invention include: Metatin™ 700 series as manufactured by Acima™, Switzerland, the TIB KAT® series such as but not limited to TIB KAT® 223, 226, 218 as manufactured by TIB Chemicals AG.

Typically, the amount of the catalyst (CA), when present, is from 0.005 wt.% to 10 wt.%, more preferably from 0.05 wt.% to 2 wt.%, most preferably from 0.05 wt.% to 1 wt.%, relative to the total weight of the composition (C).

According to certain embodiments, in any of the steps of the method according to the present invention, at least one filler [filler (F), herein after] may be added.

Among fillers (F) suitable for use in the method of the present invention, mention may be notably made of: natural, grounded or precipitated calcium carbonates which are optionally coated with fatty acids, dolomites, molochites, talc, kaolin, precipitated silica, silicic anhydride, aqueous silicic acid and carbon black, magnesium carbonate, diatomaceous earth, calcined clay, clay, heavy spar, titanium oxide, aluminum oxide, aluminum hydroxide, flint powder, bentonite, organic bentonite, ferric oxide, zinc oxide, active zinc white, glass balloon, Shirasu balloon, organic balloon, resin powders such as PVC or PMMA powder, hollow beads, organic fibers, and inorganic fibers.

Non limitative examples of commercially available fillers (F) suitable for use in the method of the present invention include: the ImerSeal™ series from Imerys, the Hubercarb® and Hymod® series available from Huber Engineered Materials, the KaMin™ series from KaMin.

Typically, the amount of the filler (F), when present, is from 1 wt.% to 70 wt.%, more preferably from 5 wt.% to 60 wt.%, most preferably from 10 wt.% to 60 wt.%, relative to the total weight of the composition (C).

According to certain embodiments, in any of the steps of the method according to the present invention, other common additional ingredients [ingredient (I), herein after] may be added to enhance the appearance, storage, transport, handling and/or performance of the product. Said ingredients (I) are known to those skilled in the art of adhesive/sealant compositions. Typical ingredients (I) may include, but are not limited to, stabilizers to protect from light, heat and/or UV-radiation; blowing agents; solvents; flame retardants; pigments; curability modifiers; radical inhibitors; metal deactivators; antiozonants; phosphorus peroxide decomposers; lubricants; adhesion promoters and crosslinkers such as epoxysilanes, (meth)acrylsilanes, anhydrosilanes or hydroxyl functional silanes such as described notably in WO 2009/130298 A1 and WO 2014/187865 A1; moisture scavengers such as vinyltrimethoxysilane, $\alpha$-functional silanes such as N-(silylmethyl)-O-methylcarbamates, for example, N-(methyldimethoxysilylmethyl) -O-methyl carbamate, (methacryloxymethyl)silanes, methoxymethylsilanes, N-phenyl-, N-cyclohexyl- and N-alkyl silanes, ortho formic acid esters, calcium oxide or molecular sieves; surface-active substances such as wetting agents, leveling agents, air release agents or defoamers; biocides such as algicides, fungicides or fungal growth inhibitors; and other substances typically used in moisture-curing compositions.

Typically, the amount of the ingredient (I), when present, is from 0.05 wt.% to 20 wt.%, more preferably from 0.1 wt.% to 10 wt.%, most preferably from 0.1 wt.% to 5 wt.%, relative to the total weight of the composition (C).

It is further understood that all definitions and preferences as described above for composition (C) as obtained in step 2 of the method according to the present invention, equally apply for this embodiment and all further embodiments, as described below.

Another aspect of the present invention is the composition (C) prepared by the method according to the present invention.

A further aspect of the present invention is an adhesive and/or sealant comprising the composition (C), as detailed above.

When applying the composition (C) as obtained in step 2 of the method of the present invention, as described above, the silane groups (SG) of the silane-modified polymer (P), come in contact with ambient moisture. The silane groups (SG) are characterized in that they hydrolyze upon contact with moisture. This leads to the formation of organosilanols and, by subsequent condensation reactions to organosiloxanes. As a result of these reactions, which may be accelerated by the use of catalysts, curing of the composition takes place. This process is also referred to as crosslinking.

The present invention further relates to a cured composition (C), obtainable from the composition (C), as described in the preceding.

It is important for the corresponding end-applications that the composition (C), as detailed above, remains substantially free of moisture in order to avoid premature crosslinking.

As used herein, the term "substantially free of moisture" means that although the composition (C) may contain some moisture, the amount of moisture is not sufficient to effect substantial curing of the composition (C).

Accordingly, the composition (C), as obtained in step 2 of the method according to the present invention, is preferably contained for storage in a water-impermeable container, in order to isolate the said composition (C) from ambient moisture. Thus, the composition (C) is preferably packed in an air-tight container to protect it from ambient moisture. One suitable impermeable material for the container is high density polyethylene or polyethylene coated with aluminum foil. The container is suitably in the form of a drum, a bag, a cartridge or respectively in the form of a sausage suitable for use in conjunction with application equipment.

Typically, the composition is storage-stable, i.e., under exclusion of moisture in a suitable package or arrangement it can be stored over a period of several months to a year and longer without changing to an extent relevant to its use with respect to its application properties or its properties after curing.

Preferably, the composition (C) is stored in one container as such (one-component system).

In a one-component system, a container may for instance be prepared by performing step 2, which comprises mixing the mixture (M) and the rheology modifier (R) and thereby forming the composition (C), right before the introduction of the composition (C) into the container. Thereby, problems during the production process, for example with pumping of the high tack composition (C), are avoided.

Alternatively, in a one component system, a container may be prepared by performing step 2 inside the container, by adding both the mixture (M) and the rheology modifier (R) to the container and shaking to mix the container content well, thereby forming composition (C) inside the container.

If desired, instead of storing composition (C) in one container and thereby using a one-component system, a two-component system may be used wherein each of the components of composition (C), mixture (M) as obtained in step 1 and the rheology modifier (R) as used in step 2, are packed separately, either in separate containers or in separate chambers of a single container. In said two-component system, step 2, which comprises mixing the mixture (M) with a rheology modifier (R), is performed at the moment of application when the first component is mixed with the second component, thereby

forming the composition (C). It is understood that the first component may comprise the mixture (M) and the second component may comprise the rheology modifier (R), or vice versa.

An advantage of said two-component systems, according to method of the present invention, is that there is no need for specialized mixing equipment, since both components have a relatively low tack value and are therefore easily delivered, mixed and applied.

In the case of two-component systems, chemical curing may be achieved by the reaction of the first component with the second component which optionally further comprises water or hydroxyl-functional molecules. The curing reaction in this case usually proceeds faster.

## A TREATMENT METHOD

It is a further object of the present invention to provide uses of said one- and two-component adhesive and/or sealant systems having a high initial tack.

The inventors have surprisingly found that not only the properties of the uncrosslinked silane-modified polymers (P) or of the compositions (C) (tack, viscosity, melting point, solubilities, etc.) but also the properties of the fully crosslinked adhesive/sealant compositions (hardness, elasticity, tensile strength, breaking extension, heat resistance, etc.) can be tailored on a virtually custom basis.

Correspondingly diverse, therefore, are the possibilities for use of the composition (C) as manufactured by the method according to the present invention. For example, the compositions (C) as obtained in step 2, can be used to produce elastomers, sealants, adhesives, elastic adhesive systems, rigid and flexible foams, any of a very wide variety of coating systems, or for impression compounds. These products can be applied in any form, as for example by spreading, spraying, pouring, pressing, knifing, etc..

As said, curing of the composition (C) takes place upon contact with moisture. The moisture required for the curing may originate either from the air (humidity), or the composition (C) as obtained in step 2 of the method of the present invention, as described above, may be brought in contact with a water-containing component, for example, by coating, for example with a smoothing agent, or by spraying; or a water-containing component may be added to the composition (C) during application, for example, in the form of a water-containing paste which is mixed in, for example, via a static mixer. When curing is caused by humidity, the composition cures from the outside to the inside. The rate of the curing process is determined by various factors, such as the rate of diffusion of water, the temperature, the ambient humidity and the bonding geometry, and generally slows down as curing progresses.

The inventors have found that typically, the composition (C) as obtained in step 2 of the method according to the present invention, is suitable as an adhesive or sealant, especially for applications that require a composition with a high initial tack and a low propensity to swamp.

The composition (C) as obtained in step 2 of the method according to the present invention is, for example, used in a method of bonding two substrates or at least part of two substrates.

Thus, another aspect of the present invention is a method of bonding two substrates or at least part of two substrates by using the composition (C), wherein said method comprises the following steps:

i) applying the composition (C), according to the description above, to at least part of a substrate S1 and/or or at least part of a substrate S2;
ii) contacting at least part of substrates S1 and S2 via the applied composition (C);
iii) curing the composition (C) by means of water, for example, in the form of moisture or hydrated salt particles thereby forming a cured composition (C); wherein substrates S1 and S2 may be the same or different from each other.

Furthermore, the composition (C) as obtained in step 2 of the method according to the present invention, may also be used in a method of sealing or coating.

Thus, another aspect of the present invention is a method of sealing or coating, by using the composition (C), wherein said method comprises the steps:

i') applying the composition (C), according to the description above, to at least part of a substrate S1 and/or between at least part of two substrates S1 and S2;
ii') curing the composition (C) by means of water, for example, in the form of moisture or hydrated salt particles thereby forming a cured composition (C); wherein substrates S1 and S2 may be the same or different from each other.

In the case of a two-component system, step i) or i') of the application of the composition (C) is preceded by a step of mixing the two components thereby forming the composition (C), as described above.

Suitable substrates S1 and/or S2 are, for example, substrates that may be selected from the group consisting of concrete, mortar, clinker, brick, ceramic, gypsum, natural stones such as granite or marble, glass, glass-ceramic, metal or

metal alloys such as aluminum, steel, nonferrous metal, galvanized metal, wood, plastics such as PVC, polycarbonate, polymethyl(meth)acrylate, polyester, epoxy resin, paint and lacquer.

The articles, which are bonded, sealed or coated with the composition (C) as obtained in step 2 of the method according to the present invention, may be for example, an industrially manufactured good or a consumer product, for example, a window or façade, solar panels, a household appliance, or a means of transportation, for example, a vehicle, or an attachment part of a vehicle, boots, caravans, and the like.

The composition (C) as obtained in step 2 of the method according to the present invention, may be applied to the substrate using a suitable device, for example, in the form of a bead having, for example, an essentially circular or triangular cross-sectional area. Suitable methods for applying the composition (C) as described above, include for example, the application from commercial cartridges, which may be operated manually, or by means of compressed air, or from a drum or bucket using a pump or an extruder, optionally by means of an application robot. The composition (C) as described above, with good application properties, has high stability and short stringing. This means, after application it remains in the applied form, i.e. does not spread out, and, upon removal of the application device, forms no or only a very short string, so that the substrate does not become dirty.

## EXPERIMENTAL TEST RESULTS

The invention will be now described in more details with reference to the following examples, whose purpose is merely illustrative and not intended to limit the scope of the invention.

### General procedure for determination of the tack values T and $T_0$ by using the Tack test method

The tack values Tand $T_0$ were determined by an oscillatory rheological measurement wherein a sinusoidal stress deformation is applied and the resultant strain response is measured. A HR-2 Discovery Hybrid Rheometer of the TA Instruments company was used, operated by the TA instruments TRIOS software, with a top rotatable stainless steel plate in combination with a fixed lower Peltier plate with a diameter of 25 mm. This Peltier plate was connected to a Peltier Circulator Thermo Cube Model 10-300. The HR-2 Discovery Hybrid Rheometer was calibrated according to the manufacturer's procedure before the start of the measurements or when the top rotatable stainless steel plate was removed for cleaning. The samples (e.g. mixture (M) or e.g. composition (C)) were free of any visual impurities or air bubbles and were conditioned at room temperature (23 ± 1 °C).

Measurement parameters:

Temperature = 20 °C
Soak time = 10 seconds
Frequency $\omega$ = 1 Hz
Top rotatable stainless steel plate diameter d = 25 mm
Shear stress sweep from 6.5 Pa to 17000Pa

Working mode:

a. the temperature of the lower Peltier plate was stabilized at 20 °C
b. the gap between the two plates was closed by moving the top rotatable stainless steel plate down
c. in the software, the gap of the measuring system was set to zero
d. the top rotatable stainless steel plate was moved up and the sample (e.g. Mixture (M) or e.g. composition (C)) was applied to the lower plate using a stainless steel spatula, the amount of the sample was such that a gap of 1000 μm between the two plates was completely filled
e. the top rotatable stainless steel plate was moved down to a gap of 1010 μm, the sample was trimmed by removing the excess of sample which was squeezed out around the edges of the two plates with a stainless steel spatula.
f. the top rotatable stainless steel plate was moved further down to a gap of 1000 μm and the measuring system was locked
g. a soak time of 10 seconds was applied to allow the sample to equilibrate to the temperature of the lower Peltier plate 20 °C
h. a logarithmic shear stress sweep was performed from 6.5 Pa to 17000 Pa with 10 measuring points per decade
i. the tack value was read out on the stress scale when the phase angle $\delta$ reached 45°, when the sample did not exhibit any tack at all or the tack was too low to measure, a tack value of 0 Pa was assigned
j. the top plate was moved up and the plates were cleaned with an appropriate solvent such as isopropanol or acetone.

The obtained tack values T are summarized in tables 2 to 6.

**General procedure for producing a composition (C) according to the invention.**

In step 1, a mixture (M), according to the invention, was prepared by mixing a silane-modified polymer (P), according to the invention, with a hydrophobic fumed silica (S), according to the invention, optionally a plasticizer (PL) and/or optionally an ingredient (I), according to the invention, in a Hauschild Speedmixer™ (DAC 150.1FVZ) at 2600 rpm for 30 seconds. Directly afterwards, the tack value $T_0$ of the mixture (M) as obtained in step 1, was determined by the tack test method, as detailed above.

In step 2, a rheology modifier (R), according to the invention, was added to the mixture (M) as obtained in step 1, in a Hauschild Speedmixer™ (DAC 150.1FVZ) at 2600 rpm for 30 seconds thereby obtaining composition (C), according to the invention. Directly afterwards, the tack value T of the composition (C) as obtained in step 2, was determined by the tack test method, as detailed above.

The list of used materials according to the invention can be found in Table 1. The BET surface areas as mentioned in Table 1 were determined by the method ISO 66131.

TABLE 1 : LIST OF PRODUCTS AND DESCRIPTION

| **Silane-modified polymer (P) according to the invention** | **Company** | **Description** |
|---|---|---|
| Geniosil® STP-E30 | Wacker Chemie AG | Dimethoxy(methyl)silylmethylcarbamate-terminated polyether |
| Geniosil® STP-E15 | Wacker Chemie AG | Trimethoxysilylpropylcarbamate-terminated polyether |
| Kaneka MS Polymer™ SAX400 | Kaneka Corporation | Dimethoxymethylsilane MS Polymer™; branched; high functionality |
| Kaneka MS Polymer™ SAX580 | Kaneka Corporation | Trimethoxysilane MS polymer™; branched; low functionality |
| Kaneka MS Polymer™ MAX951 | Kaneka Corporation | Dimethoxymethylsilane MS polymer™ Acryl Modified |
| Desmoseal® S XP 2636 | Covestro | Aliphatic silane-terminated prepolymer |
| **Rheology Modifier (R) according to the invention** | **Company** | **Functionality** |
| Silquest A1110 | MomentiveT M | primary aminotrimethoxysilane |
| Dynasylan® 1189 | Evonik Industries | secondary aminotrimethoxysilane |
| Dynasylan® 1146 | Evonik Industries | Oligomeric diaminosilane |
| **Plasticizer** | **Company** | **Functionality** |
| Jayflex™ DINP | ExxonMobil | Diisononyl-phthalate (DINP) |
| Mesamoll® | Lanxess | alkylsulphonic acid ester with phenol |
| **Hydrophobic Fumed Silica (S) according to the invention** | **Company** | **Hydrophobic treatment; BET surface area ($m^2$/g)** |
| Aerosil® R104 | Evonik Industries | Octamethylcyclotetrasiloxane; BET 150 $m^2$/g |
| Aerosil® R106 | Evonik Industries | Octamethylcyclotetrasiloxane; BET 250 $m^2$/g |
| Aerosil® R805 | Evonik Industries | Alkylsilane; BET 150 $m^2$/g |
| Aerosil® R202 | Evonik Industries | Polydimethylsiloxane (PDMS); BET 100 $m^2$/g |

(continued)

| Hydrophobic Fumed Silica (S) according to the invention | Company | Hydrophobic treatment; BET surface area ($m^2/g$) |
|---|---|---|
| Aerosil® RY200 | Evonik Industries | Polydimethylsiloxane (PDMS); BET 100 $m^2/g$ |
| Aerosil® R812S | Evonik Industries | Hexamethyldisilazane (HMDS); BET 220 $m^2/g$ |
| Aerosil® R972 | Evonik Industries | Dimethyldichlorosilane; BET 110 $m^2/g$ |
| HDK®-H18 | Wacker Chemie AG | Polydimethylsiloxy; BET 200 $m^2/g$ |
| HDK®-H20 | Wacker Chemie AG | Dimethylsiloxy; BET 200 $m^2/g$ |
| **Filler** | **Company** | **Description** |
| ImerSeal™ 50 | Imerys | ground calcium carbonate with special coating, D50 <2 μ and moisture content <0.05%. |
| **Moisture Scavenger** | **Company** | **Description** |
| Dynasylan® VTMO | Evonik Industries | Vinyltrimethoxysilane |

***Influence of the nature of the rheology modifier***

**Examples 1 to 3 according to the invention**

Examples 1 to 3 were prepared according to the general procedure, as described above, whereby the mixture (M) was prepared in step 1 by mixing 34.54 g of Geniosil® STP-E30 (i.e. silane-modified polymer (P)), 13.7 g of Aerosil® R106 (i.e. hydrophobic fumed silica (S)), 48.8 g of Jayflex™ DINP (i.e. plasticizer) and 1.45 g of Dynasylan® VTMO (i.e. moisture scavenger). Then in step 2, 1.45 g of a rheology modifier (R) according to the invention and as detailed in Table 2 below, was added to said mixture (M). The data are summarized in Table 2 below. The mixture (M) for the examples 1 to 3 did not show any tack at all and was assigned a tack value $T_0$ of 0 Pa

**Comparative Examples 4 to 6**

Comparative examples 4 to 6 were prepared according to the same procedure as examples 1 to 3 except that in step 2, a rheology modifier was used which was not according to general formula (II), as detailed below.

Specifically, in comparative example 4, Dynasylan® VTMO (vinyltrimethoxysilane) having as formula $H_2C=CH-Si(OCH_3)_3$, was used, in comparative example 5, Silquest A187 having following structure, as shown below, was used

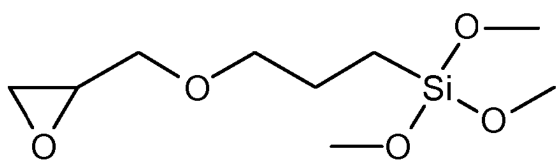

and in comparative example 6, Pluriol® E 200 LS Polyethylene Glycol with an average molecular weight of 200 g/mol was used. The data are summarized in Table 2 below. The mixture (M) for the comparative examples 4 to 6 did not show any tack at all and was assigned a tack value $T_0$ of 0 Pa.

TABLE 2 :INFLUENCE OF THE RHEOLOGY MODIFIER

| Example number | 1 | 2 | 3 | COMP. EX. 4 | COMP. EX. 5 | COMP. EX. 6 |
|---|---|---|---|---|---|---|
| ***Step 1*** | | | | | | |
| *Silane-modified Polymer (P) according to the invention* | Amount (in grams) | | | | | |
| Geniosil® STP-E30 | 34.54 | 34.54 | 34.54 | 34.54 | 34.54 | 34.54 |
| *Hydrophobic fumed silica (S) according to the invention* | Amount (in grams) | | | | | |
| Aerosil® R106 | 13.7 | 13.7 | 13.7 | 13.7 | 13.7 | 13.7 |
| ***Step 2*** | | | | | | |
| *Rheology modifier (R) according to the invention* | Amount (in grams) | | | | | |
| Silquest A1110 | 1.45 | 0 | 0 | 0 | 0 | 0 |
| Dynasilan® 1189 | 0 | 1.45 | 0 | 0 | 0 | 0 |
| Dynasilan® 1146 | 0 | 0 | 1.45 | 0 | 0 | 0 |
| *Comparative rheology modifier* | Amount (in grams) | | | | | |
| Dynasilan® VTMO | 0 | 0 | 0 | 1.45 | 0 | 0 |
| Silquest A187 | 0 | 0 | 0 | 0 | 1.45 | 0 |
| Pluriol® E200 | 0 | 0 | 0 | 0 | 0 | 1.45 |
| **Tack T (Pa)** | 16585 | 12822 | >17000 | 0 | 0 | 0 |

The data in Table 2 clearly demonstrate the importance of the presence of moieties X, and the silane group, as described above for the Rheology modifier (R) of general formula (II).

When the group X, as detailed above, is not present in the rheology modifier, for example in the rheology modifier as used in comparative example 4 and 5, there is no development of a tack value T in step 2.

When a silane group is not present in the rheology modifier, for example in the rheology modifier as used in comparative example 6, there is again no development of a tack value T in step 2.

Furthermore, the data in Table 2 clearly demonstrate that the tack value T can be tuned by careful selection of the rheology modifier (R) according to the method of the present invention.

***Influence of the nature of the hydrophobic fumed silica***

**Examples 7 to 9 according to the invention and Examples 10 to 15 not according to the present invention**

Examples 1 to 3 were prepared according to the general procedure, as described above, whereby the mixture (M) was prepared in step 1 by mixing 34.54 g of Geniosil® STP-E30 (i.e. silane-modified polymer (P)), a hydrophobic fumed silica (S) according to the invention, as detailed below in Table 3, 48.8 g of Jayflex™ DINP (i.e. plasticizer) and 1.45 g of Dynasylan® VTMO (i.e. moisture scavenger). Then in step 2, 1.45 g of Silquest A1110 (i.e. rheology modifier (R)) was added to said mixture (M). The data are summarized in Table 3 below. The mixture (M) for the examples 7 to 10 and 12, did not show any tack at all and was assigned a tack value $T_0$ of 0 Pa. The mixture (M) showed a tack value $T_0$ for the example 11 of 153 Pa, for the example 13 of 316 Pa, for the example 14 of 98 Pa, for the example 15 of 54 Pa.

**Comparative Example 16**

Comparative examples 1 was prepared according to the same procedure as examples 7 to 15 except that in step 1, a hydrophilic fumed silica, Aerosil® 150, was used, as detailed below. The data are summarized in Table 3 below. The mixture (M) for the comparative example 16 showed a tack value $T_0$ of 83 Pa.

TABLE 3 : INFLUENCE OF THE HYDROPHOBIC FUMED SILICA

| **Example number** | 7[a] | 8[a] | 9[a] | *10[a] | *11[b] | *12[a] | *13[c] | *14[d] | *15[e] | comp. ex 16[f] |
|---|---|---|---|---|---|---|---|---|---|---|
| ***Step 1*** | | | | | | | | | | |
| *Silane-modified polymer (P) according to the invention* | Amount (in grams) | | | | | | | | | |
| Geniosil® STP-E30 | 34.54 | 34.54 | 34.54 | 34.54 | 34.54 | 34.54 | 34.54 | 34.54 | 34.54 | 34.54 |
| *Hydrophobic fumed silica (S) according to the invention* | Amount (in grams) | | | | | | | | | |
| *Hydrophobizing Agent (HA) Octamethylcyclotetrasiloxane* | | | | | | | | | | |
| Aerosil® R106 | 13.7 | 0 | 0 | 0 | 0 | 0 | 0 | 0 | 0 | 0 |
| Aerosil® R104 | 0 | 13.7 | 0 | 0 | 0 | 0 | 0 | 0 | 0 | 0 |
| *Hydrophobizing Agent (HA) Alkylsilane* | | | | | | | | | | |
| Aerosil® R805 | 0 | 0 | 13.7 | 0 | 0 | 0 | 0 | 0 | 0 | 0 |
| *Hydrophobizing Agent (HA) Hexamethyldisilazane* | | | | | | | | | | |
| Aerosil® R812S | 0 | 0 | 0 | 13.7 | 0 | 0 | 0 | 0 | 0 | 0 |
| *(Hydrophobizing Agent (HA) Dimethylsiloxane* | | | | | | | | | | |
| HDK®-H20 | 0 | 0 | 0 | 0 | 10 | 0 | 0 | 0 | 0 | 0 |
| *Hydrophobizing Agent (HA) Dimethyldichlorosilane* | | | | | | | | | | |
| Aerosil® R972 | 0 | 0 | 0 | 0 | 0 | 13.7 | 0 | 0 | 0 | 0 |
| *Hydrophobizing Agent (HA) Polydimethylsiloxane* | | | | | | | | | | |
| Aerosil® R202 | 0 | 0 | 0 | 0 | 0 | 0 | 13.7 | 0 | 0 | 0 |
| HDK®-H18 | 0 | 0 | 0 | 0 | 0 | 0 | 0 | 10 | 0 | 0 |
| Aerosil® RY200 | 0 | 0 | 0 | 0 | 0 | 0 | 0 | 0 | 13.7 | 0 |
| *Comparative example: No Hydrophobizing Agent (HA)* | Amount (in grams) | | | | | | | | | |
| Aerosil® 150 | 0 | 0 | 0 | 0 | 0 | 0 | 0 | 0 | 0 | 4 |
| ***STEP 2*** | | | | | | | | | | |
| *Rheology modifier (R) according to the invention* | Amount (in grams) | | | | | | | | | |
| Silquest A1110 | 1.45 | 1.45 | 1.45 | 1.45 | 1.45 | 1.45 | 1.45 | 1.45 | 1.45 | 1.45 |
| **Tack T (Pa)** | 16585 | 14924 | 12345 | 11733 | 8718 | 7017 | 5741 | 4160 | 2048 | 0 |

**[a] No tack for mixture (M), $T_0$ = 0 Pa; [b] mixture (M) tack value $T_0$ = 153 Pa**
**[c] mixture (M) tack value $T_0$ = 316 Pa; [d] mixture (M) tack value $T_0$ = 98 Pa**
**[e] mixture (M) tack value $T_0$ = 54 Pa; [f] mixture (M) tack value $T_0$ = 83 Pa**

*** Examples not according to the present invention**

The results in Table 3 clearly show the influence of using different types of hydrophobic silica (S). Most of the mixtures (M) showed a very low tack value $T_0$ or no tack $T_0$ at all (tack value $T_0$ of 0 Pa).

All tack values T of examples 7 to 15 fulfill the requirements of equation 1, as detailed above in the description.

Differences among the different hydrophobic fumed silicas (S) were characterized in function of the hydrophobizing agent (HA) that was used. As shown in table 3, according to which tack value T is wanted, a different hydrophobic fumed silica (S) can be selected. For example, a high tack value T was obtained with octamethylcyclotetrasiloxane treated hydrophobic fumed silicas (S). A midrange tack value T was obtained with dimethyldichlorosilane treated hydrophobic fumed silicas (S).

Use of a hydrophilic fumed silica, comparative example 16, resulted in lowering of the tack value T showing the importance of the hydrophobicity of the fumed silicas.

***Influence of the nature of the silane-modified polymer (P)***

**Examples 17 to 22 according to the invention**

Examples 17 to 22 were prepared according to the general procedure, as described above, whereby the mixture (M) was prepared in step 1 by mixing 34.54 g of a silane-modified polymer (P), according to the invention, as detailed below in Table 4, 13.7 g of Aerosil® R106 (i.e. hydrophobic fumed silica (S)), 48.8 g of Jayflex™ DINP (i.e. plasticizer) and 1.45 g of Dynasylan® VTMO (i.e. moisture scavenger). Then in step 2, 1.45 g of Silquest A1110 (i.e. rheology modifier (R)) was added to said mixture (M). The data are summarized in Table 4 below. The mixture (M) for the examples 17 to 20 and 22, did not show any tack at all and were assigned a tack value $T_0$ of 0 Pa. The mixture (M) for the example 21 showed a tack value $T_0$ of 208 Pa.

TABLE 4 : INFLUENCE OF THE SILANE-MODIFIED POLYMER (P)

| **Example number** | 17[g] | 18 [g] | 19 [g] | 20 [g] | 21 [h] | 22 [g] |
|---|---|---|---|---|---|---|
| ***Step 1*** | | | | | | |
| *Silane-modified polymer (P) according to the invention* | Amount (in grams) | | | | | |
| *Silane-modified polyethers* | | | | | | |
| Geniosil® STP-E30 | 34.54 | 0 | 0 | 0 | 0 | 0 |
| Geniosil® STP-E15 | 0 | 34.54 | 0 | 0 | 0 | 0 |
| Kaneka MS Polymer™ SAX580 | 0 | 0 | 34.54 | 0 | 0 | 0 |
| Kaneka MS Polymer™ SAX400 | 0 | 0 | 0 | 34.54 | 0 | 0 |
| Kaneka MS Polymer™ MAX951 (mixture of silane-modified polyether/ silane-modified polyacrylate) | 0 | 0 | 0 | 0 | 34.54 | 0 |
| *Silane-modified polyurethanes* | | | | | | |
| Desmoseal® XP2636 | 0 | 0 | 0 | 0 | 0 | 34.54 |
| *Hydrophobic fumed silica (S) according to the invention* | Amount (in grams) | | | | | |
| Aerosil® R106 | 13.7 | 13.7 | 13.7 | 13.7 | 13.7 | 13.7 |
| ***Step 2*** | | | | | | |
| *Rheology modifier (R) according to the invention* | Amount (in grams) | | | | | |
| Silquest A1110 | 1.45 | 1.45 | 1.45 | 1.45 | 1.45 | 1.45 |
| **Tack T (Pa)** | 16585 | 7060 | 3374 | 2117 | 1448 | 12424 |

**[g] No tack for mixture (M), $T_0$ = 0 Pa; [h] mixture (M) tack value $T_0$ = 208 Pa**

The results in Table 4 clearly show the influence of using a different silane-modified polymer (P).

All tack values T of examples 17 to 22 fulfill the requirements of equation 1, as detailed above in the description.

Again, according to the desire of which tack value T is wanted and which application is envisaged, a different silane-modified polymer (P) can be selected or combinations of polymer types can be envisioned.

***Influence of using different plasticizers***

**Examples 23 and 24 according to the invention**

Examples 23 and 24 were prepared according to the general procedure, as described above, whereby the mixture (M) was prepared in step 1 by mixing 34.54 g of Geniosil® STP-E30 (i.e. silane-modified polymer (P)), 13.7 g of Aerosil® R106 (i.e. hydrophobic fumed silica (S)), 48.8 g of a plasticizer, according to the invention, as detailed below in Table 5, and 1.45 g of Dynasylan® VTMO (i.e. moisture scavenger). Then in step 2, 1.45 g of Silquest A1110 (i.e. rheology modifier (R)) was added to said mixture (M). The data are summarized in Table 5 below. The mixture (M) for the examples 23 and 24, did not show any tack at all and were assigned a tack value $T_0$ of 0 Pa.

TABLE 5 : INFLUENCE OF THE PLASTICIZER

| **Example number** | **23** | **24** |
|---|---|---|
| ***Step 1*** | | |
| *Silane-modified polymer (P)* | Amount (in grams) | |
| Geniosil® STP-E30 | 34.54 | 34.54 |
| *Hydrophobic fumed silica (S) according to the invention* | Amount (in grams) | |
| Aerosil® R106 | 13.7 | 13.7 |
| *Plasticizer (PL) according to the invention* | Amount (in grams) | |
| Jayflex™ DINP | 48.8 | 0 |
| Mesamoll® | 0 | 48.8 |
| ***Step 2*** | | |
| *Rheology modifier (R) according to the invention* | Amount (in grams) | |
| Silquest A1110 | 1.45 | 1.45 |
| **Tack T (Pa)** | 16585 | >17000 |

The results in Table 5 clearly show that using a different plasticizer (PL) has no significant influence on the tack value T of the resulting compositions (C) as obtained in step 2.

***Influence of using a filler***

**Examples 25 and 26 according to the invention**

Examples 25 and 26 were prepared according to the general procedure, as described above, whereby the mixture (M) was prepared in step 1 by mixing Geniosil® STP-E30 (i.e. silane-modified polymer (P)), Aerosil® R106 (i.e. hydrophobic fumed silica (S)), Jayflex™ DINP (i.e. plasticizer (PL)), Dynasylan® VTMO (i.e. moisture scavenger) in amounts as detailed below in Table 6. In Example 26 ImerSeal® 50 (i.e. a filler (F)) was added in step 1 as well. Then in step 2, 1.45 g of Silquest A1110 (i.e. rheology modifier (R)) was added to said mixture (M). The data are summarized in Table 6 below. The mixture (M) for the examples 25 and 26, did not show any tack at all and were assigned a tack value $T_0$ of 0 Pa.

TABLE 6 : INFLUENCE OF FILLER

| Example number | 25 | 26 |
|---|---|---|
| *Step 1* | | |
| *Silane-modified polymer (P) according to the invention* | Amount (in grams) | |
| Geniosil® STP-E30 | 34.54 | 31.2 |
| *Hydrophobic fumed silica (S) according to the invention* | Amount (in grams) | |
| Aerosil® R106 | 13.7 | 10.3 |
| *Adhesion Promoter* | Amount (in grams) | |
| Dynasilan® VTMO | 1.45 | 1.24 |
| *Filler* | Amount (in grams) | |
| ImerSeal® 50 | 0 | 15.6 |
| *Plasticizer (PL) according to the invention* | Amount (in grams) | |
| Jayflex™ DINP | 48.8 | 40.5 |
| *Step 2* | | |
| *Rheology modifier (R) according to the invention* | Amount (in grams) | |
| Silquest A1110 | 1.45 | 1.45 |
| **Tack T (Pa)** | 16585 | 12150 |

The results in Table 6 show clearly show that the addition of a filler has a slight influence on the tack value T of the resulting compositions (C) as obtained in step 2.

## Claims

1. A method for manufacturing a composition [composition (C), herein after] suitable for use as a sealant and/or adhesive which comprises the steps of:

step 1: mixing at least one silane-modified polymer [silane-modified polymer (P), herein after], wherein said silane-modified polymer (P) comprises at least one silane group of general formula (I);

$$-(A)_b-(CH_2)_m-SiR^1_a(Y)_{3-a} \qquad \text{formula (I)}$$

wherein:

- A is each independently a divalent linker group selected from the group consisting of -O-, -S-, -($R^2$)N-, -O-CO-N($R^2$)-, - N($R^2$)-CO-O-, -N($R^2$)-CO-NH-, -NH-CO-N($R^2$)-, and -N($R^2$)-CO-N($R^2$)-, wherein $R^2$ is hydrogen, $C_{1-18}$alkyl, $C_{2-18}$ alkenyl or $C_{1-6}$ aryl group;
- $R^1$ is a $C_{1-10}$ alkyl, $C_{2-10}$ alkenyl, $C_{1-10}$ cycloalkyl or $C_{6-10}$ aryl group;
- Y is each independently a hydroxyl or hydrolysable group;
- a is an integer ranging from 0 to 3;
- b is an integer ranging from 0 to 1;
- m is an integer ranging from 0 to 6;

with at least one hydrophobic fumed silica [hydrophobic fumed silica (S), herein after], having a BET surface area of at least 50 $m^2/g$ and wherein the at least one hydrophobic fumed silica (S) is produced by treating a hydrophilic fumed silica with a hydrophobizing agent wherein the hydrophobizing agent is octamethylcyclotetrasiloxane or alkylsilanes, whereby alkylsilanes are chosen from octyltrialkoxysilanes or hexyltrialkoxysilanes, so as to obtain a mixture [mixture (M), herein after], wherein said mixture (M) has a tack value $T_0$, measured in accordance with the oscillatory rheological tack test method as cited in the description [tack test, herein after], equal to or less than

1000 Pa;

step 2: adding to the mixture (M) as obtained in step 1, at least one rheology modifier of general formula (II) [rheology modifier (R), herein after] or an oligomeric siloxane wherein the oligomeric siloxane is formed by condensation of partially or completely hydrolyzed silanes of general formula (II),

$$X\text{-}B\text{-}SiR^3_c(OR^4)_{3-c} \qquad \text{formula (II)}$$

wherein:

- X is independently selected from the group consisting of:

  - $SR^5$ wherein $R^5$ is independently selected from hydrogen, $C_{1-10}$ alkyl, $C_{2-10}$ alkenyl, $C_{1-10}$ cycloalkyl, $C_{6-10}$ aryl group or - (C=O)-$R^6$ wherein $R^6$ is a $C_{1-10}$ alkyl, $C_{2-10}$ alkenyl or $C_{6-10}$ aryl group,
  - $NR^7R^8$ wherein $R^7$ and $R^8$ are each independently selected from the group consisting of hydrogen; $C_{1-10}$ alkyl, $C_{2-10}$ alkenyl, $C_{1-10}$ cycloalkyl, $C_{6-10}$ aryl or $C_{6-10}$ aralkyl wherein said alkyl, alkenyl, cycloalkyl aryl and aralkyl are optionally substituted by hydroxyl, $SiR^{11}_b(OR^{12})_{3-b}$, or $NR^{13}R^{14}$; or-(C=O)-$NR^9R^{10}$; and wherein $R^9$ and $R^{10}$ are each independently selected from the group consisting of hydrogen, $C_{1-10}$ alkyl, $C_{2-10}$ alkenyl, $C_{1-10}$ cycloalkyl, $C_{6-10}$ aryl or $C_{6-10}$ aralkyl; and wherein $R^{11}$ and $R^{12}$ are each independently selected from the group consisting of a $C_{1-10}$ alkyl, $C_{2-10}$ alkenyl, $C_{1-10}$ cycloalkyl or $C_{6-10}$ aryl group; and wherein $R^{13}$ and $R^{14}$ are each independently selected from the group consisting of hydrogen, $C_{1-10}$ alkyl, $C_{2-10}$ alkenyl, $C_{1-10}$ cycloalkyl, $C_{6-10}$ aryl or $C_{6-10}$ aralkyl and each optional alkyl, alkenyl, cycloalkyl aryl and aralkyl is further optionally substituted by a hydroxyl or amino group,
  - $OR^{15}$ wherein $R^{15}$ is independently selected from hydrogen, $C_{1-10}$ alkyl, $C_{2-10}$ alkenyl, $C_{1-10}$ cycloalkyl, $C_{6-10}$ aryl or $C_{6-10}$ aralkyl wherein said alkyl, alkenyl, cycloalkyl aryl and aralkyl are optionally substituted by one or more substituents selected from OH, $NR^{16}R^{17}$ wherein $R^{16}$ and $R^{17}$ either individually each represents a hydrogen or $C_{1-12}$ alkyl which optionally comprises heteroatoms in the form of ether oxygen, thioether sulfur or tertiary amine nitrogen, or $R^{16}$ and $R^{17}$ together represent a divalent $C_{2-10}$ aliphatic group, which optionally comprises heteroatoms in the form of ether oxygen, thioether sulfur or tertiary amine nitrogen;

- B is a divalent linker group independently selected from the group consisting of a divalent saturated $C_{1-20}$ aliphatic group, a divalent unsaturated $C_{2-20}$ aliphatic group, a divalent $C_{6-20}$ aromatic group or a divalent $C_{6-20}$ aralkylene group;
- $R^3$ is a $C_{1-10}$ alkyl, $C_{2-10}$ alkenyl, $C_{1-10}$ cycloalkyl or $C_{6-10}$ aryl group wherein said alkyl, alkenyl, cycloalkyl and aryl, are optionally substituted with a halogen atom, an aryl group or an aralkyl group;
- $R^4$ is a $C_{1-20}$ alkyl or $C_{6-10}$ aryl group wherein said alkyl and aryl, are optionally substituted with a halogen atom, an aryl group or an aralkyl group;
- c is an integer ranging from 0 to 3;

thereby forming the composition (C) wherein said composition (C) has a tack value T, measured in accordance with the tack test, wherein

$$T \geq \frac{K\left(\frac{T_0}{260\ \mathrm{Pa}}\right)^{11} + L}{1 + \left(\frac{T_0}{260\ \mathrm{Pa}}\right)^{11}} \qquad \text{(equation 1)}$$

and K is equal to or greater than 6000 Pa,

and L is equal to or greater than 1000 Pa; and wherein the weight percent of the hydrophobic fumed silica (S) as used in step 1, relative to the total weight of the composition (C) as obtained in step 2, is equal to or greater than 10 wt.%.

**2.** The method according to claim 1, wherein L is equal to or greater than 7000 Pa, preferably equal to or greater than 8000 Pa, more preferably equal to or greater than 9000 Pa, even more preferably equal to or greater than 10000 Pa, even more preferably equal to or greater than 11000 Pa, most preferably equal to or greater than 12000 Pa.

**3.** The method according to claim 1, wherein K is equal to or greater than 7000 Pa, preferably equal to or greater than

8000 Pa, more preferably equal to or greater than 9000 Pa, even more preferably equal to or greater than 10000 Pa, even more preferably equal to or greater than 11000 Pa, most preferably equal to or greater than 12000 Pa.

4. The method according to any one of claims 1 to 3, wherein Y in the silane group (SG) of general formula (I) in the silane-modified polymer (P) is a hydrolysable group selected from the group consisting of halogen atoms, alkoxy groups, acyloxy groups, ketoxymate groups, amino groups, amide groups, acid amide groups, aminooxy groups, mercapto groups, and alkenyloxy groups.

5. The method according to any one of claims 1 to 4, wherein A is a divalent linker group independently selected from the group consisting of -O-, -O-CO-N($R^2$)-, -N($R^2$)-CO-O-, -N($R^2$)-CO-N($R^2$)-, wherein $R^2$ is hydrogen, $C_{1-5}$ alkyl or $C_{1-6}$ aryl group.

6. The method according to any one of claims 1 to 5, wherein the silane-modified polymer (P) is selected from the group consisting of silane-modified polysiloxanes, silane-modified polysiloxane-urea/urethane copolymers, silane-modified polyurethanes, silane-modified polyureas, silane-modified polyethers, silane-modified polyesters, silane-modified polyacrylates and silane-modified polymethacrylates, silane-modified polycarbonates, silane-modified polystyrenes, silane-modified polyamides, silane-modified polyvinyl esters or silane-modified polyolefins such as, for example, silane-modified polyethylene, silane-modified poly-butadiene, silane-modified ethylene-olefin copolymers and silane-modified styrene-butadiene copolymers, or a mixture of two or more thereof.

7. The method according to any one of claims 1 to 6, wherein the weight percent of the silane-modified polymer (P) as used in step 1, relative to the total weight of the composition (C), is equal to or greater than 5 wt.%, preferably equal to or greater than 10 wt.%, more preferably equal to or greater than 15 wt.% and equal to or less than 99 wt.%, preferably equal to or less than 90 wt.%, more preferably equal to or less than 85 wt.%, even more preferably equal to or less than 75 wt.%, even more preferably equal to or less than 70 wt.%, most preferably equal to or less than 65 wt.%.

8. The method according to any one of claims 1 to 7, wherein the weight percent of the hydrophobic fumed silica (S) as used in step 1, relative to the total weight of the composition (C), is equal to or less than 30 wt.%, preferably equal to or less than 20 wt.%, more preferably equal to or less than 15 wt.%.

9. The method according to any one of claims 1 to 8, wherein the rheology modifier (R) of general formula (II), is a compound chosen among those of formulae (VII) to (IX):

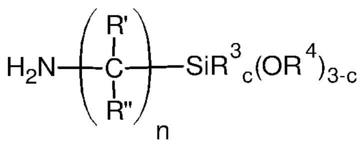

formula (VII)

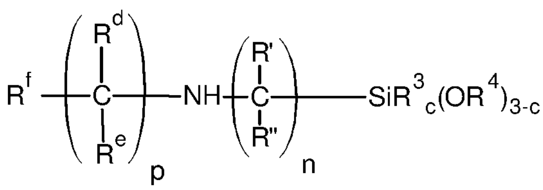

formula (VIII)

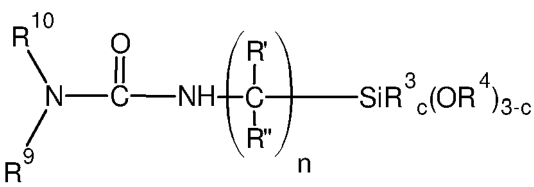

formula (IX)

wherein n is an integer ranging from 1 to 10; c is an integer ranging from 0 to 1, preferably c is 0; wherein $R^3$ is a $C_{1-10}$ alkyl group; $R^4$ is a $C_{1-10}$ alkyl group, preferably $R^4$ is a methyl, ethyl, propyl, isopropyl, butyl, isobutyl or tert-butyl group; R' and R", independently from each other and at each occurrence, may be selected from hydrogen, $C_{1-10}$ alkyl

or $C_{2-10}$ alkenyl wherein said alkyl and alkenyl, are optionally substituted with a halogen atom, an aryl group or an aralkyl group; preferably each of R' and R", are selected from hydrogen or an $C_{1-4}$ alkyl and wherein p is an integer ranging from 1 to 10; and wherein $R^9$ and $R^{10}$ are each independently selected from hydrogen or $C_{1-10}$ alkyl; and each of $R^d$, $R^e$ and $R^f$ are each independently selected from hydrogen, OH or $NR^{13}R^{14}$ wherein $R^{13}$ and $R^{14}$ are each independently selected from hydrogen or $C_{1-10}$ alkyl wherein said alkyl is optionally substituted by an amino group.

**10.** The method according to any one of claims 1 to 9, wherein the weight percent of the rheology modifier (R) as used in step 2, relative to the total weight of the composition (C), is equal to or greater than 0.1 wt.%, preferably equal to or greater than 0.5 wt.%, more preferably equal to or greater than 0.7 wt.% and equal to or less than 10 wt.%, preferably equal to or less than 5 wt.%, more preferably equal to or less than 3 wt.%, most preferably equal to or less than 2 wt.%.

**11.** A composition (C) prepared according to the method according to any one of the claims 1 to 10.

**12.** An adhesive and/or sealant comprising the composition (C) according to claim 11.

**13.** A cured composition (C), obtainable from the composition (C) according to claim 11.

**14.** A method of bonding two substrates or at least part of two substrates by using the composition (C) according to claim 11, wherein said method comprises the following steps:

i) applying the composition (C) to at least part of a substrate S1 and/or at least part of a substrate S2;
ii) contacting at least part of substrates S1 and S2 via the applied composition (C);
iii) curing the composition (C) by means of water, for example, in the form of moisture or hydrated salt particles thereby forming the cured composition (C); wherein substrates S1 and S2 may be the same or different from each other.

**15.** A method of sealing or coating, by using the composition (C) according to claim 11, wherein said method comprises the steps:

i') applying the composition (C) to at least part of a substrate S1 and/or between at least part of two substrates S1 and S2;
ii') curing the composition (C) by means of water, for example, in the form of moisture or hydrated salt particles thereby forming the cured composition (C); wherein substrates S1 and S2 may be the same or different from each other.

## Patentansprüche

**1.** Ein Verfahren zur Herstellung einer Zusammensetzung [nachstehend Zusammensetzung (C)], geeignet zur Verwendung als ein Dichtstoff und/oder Klebstoff, welches folgende Schritte umfasst:

Schritt 1: Mischen von zumindest einem silanmodifizierten Polymer [nachstehend silanmodifiziertes Polymer (P)], wobei das silanmodifizierte Polymer (P) mindestens eine Silangruppe der allgemeinen Formel (I) umfasst;

$$-(A)_b-(CH_2)_m-SiR^1{}_a(Y)_{3-a} \qquad \text{Formel (I)}$$

wobei:

- A jeweils unabhängig eine zweiwertige Verknüpfungsgruppe ist, ausgewählt aus der Gruppe bestehend aus -O-, -S-, $-(R^2)N-$, - O-CO-N($R^2$)-, -N($R^2$)-CO-O-, -N($R^2$)-CO-NH-, -NH-CO-N($R^2$)-, und -N($R^2$)-CO-N($R^2$)-, wobei $R^2$ Wasserstoff, $C_{1-18}$-Alkyl, $C_{2-18}$-Alkenyl oder eine $C_{1-6}$-Arylgruppe ist;
- $R^1$ ein $C_{1-10}$-Alkyl, $C_{2-10}$-Alkenyl, $C_{1-10}$-Cycloalkyl oder eine $C_{6-10}$-Arylgruppe ist;
- Y jeweils unabhängig eine Hydroxyl- oder hydrolysierbare Gruppe ist;
- a eine Ganzzahl von 0 bis 3 ist;
- b eine Ganzzahl von 0 bis 1 ist;
- m eine Ganzzahl von 0 bis 6 ist;

mit zumindest einer hydrophoben pyrogenen Kieselsäure [nachstehend hydrophobe pyrogene Kieselsäure (S)],

mit einer BET-Oberfläche von mindestens 50 $m^2/g$ und wobei die zumindest eine hydrophobe pyrogene Kieselsäure (S) hergestellt wird, indem eine hydrophile pyrogene Kieselsäure mit einem Hydrophobisierungsmittel behandelt wird, wobei das Hydrophobisierungsmittel Octamethylcyclotetrasiloxan oder Alkylsilane ist, wobei Alkylsilane ausgewählt sind aus Octyltrialkoxysilanen oder Hexyltrialkoxysilanen, um so eine Mischung [nachstehend Mischung (M)] zu erhalten, wobei die Mischung (M) einen Tack-Wert $T_0$, gemessen nach dem oszillierenden rheologischen Tack-Testverfahren wie zitiert in der Beschreibung [nachstehend Tack-Test], von gleich oder weniger als 1.000 Pa hat;
Schritt 2: Hinzufügen zur Mischung (M) wie erhalten in Schritt 1, von zumindest einem Rheologiemodifikator der allgemeinen Formel (II) [nachstehend Rheologiemodifikator (R)] oder einem oligomeren Siloxan, wobei das oligomere Siloxan durch Kondensierung von teilweise oder vollständig hydrolysierten Silanen der allgemeinen Formel (II) gebildet wird,

$$X\text{-}B\text{-}SiR^3_c(OR^4)_{3-c} \qquad \text{Formel (II)}$$

wobei:

- X unabhängig ausgewählt ist aus der Gruppe bestehend aus:

  - $SR^5$, wobei $R^5$ unabhängig ausgewählt ist aus Wasserstoff, $C_{1-10}$-Alkyl, $C_{2-10}$-Alkenyl, $C_{1-10}$-Cycloalkyl, einer $C_{6-10}$-Arylgruppe oder - (C=O)-$R^6$, wobei $R^6$ ein $C_{1-10}$-Alkyl, $C_{2-10}$-Alkenyl oder eine $C_{6-10}$-Arylgruppe ist,
  - $NR^7R^8$, wobei $R^7$ und $R^8$ jeweils unabhängig ausgewählt sind aus der Gruppe bestehend aus Wasserstoff; $C_{1-10}$-Alkyl, $C_{2-10}$-Alkenyl, $C_{1-10}$-Cycloalkyl, $C_{6-10}$-Aryl oder $C_{6-10}$-Aralkyl, wobei Alkyl, Alkenyl, Cycloalkyl, Aryl und Aralkyl optional ersetzt sind durch Hydroxyl, $SiR^{11}_b(OR^{12})_{3-b}$, oder $NR^{13}R^{14}$; oder -(C=O)-$NR^9R^{10}$; und wobei $R^9$ und $R^{10}$ jeweils unabhängig ausgewählt sind aus der Gruppe bestehend aus Wasserstoff, $C_{1-10}$-Alkyl, $C_{2-10}$-Alkenyl, $C_{1-10}$-Cycloalkyl, $C_{6-10}$-Aryl oder $C_{6-10}$-Aralkyl; und wobei $R^{11}$ und $R^{12}$ jeweils unabhängig ausgewählt sind aus der Gruppe bestehend aus einem $C_{1-10}$-Alkyl, $C_{2-10}$-Alkenyl, $C_{1-10}$-Cycloalkyl oder einer $C_{6-10}$-Arylgruppe; und wobei $R^{13}$ und $R^{14}$ jeweils unabhängig ausgewählt sind aus der Gruppe bestehend aus Wasserstoff, $C_{1-10}$-Alkyl, $C_{2-10}$-Alkenyl, $C_{1-10}$-Cycloalkyl, $C_{6-10}$-Aryl oder $C_{6-10}$-Aralkyl und jedes optionale Alkyl, Alkenyl, Cycloalkyl, Aryl und Aralkyl ferner optional durch eine Hydroxyl- oder Aminogruppe ersetzt ist,
  - $OR^{15}$, wobei $R^{15}$ unabhängig ausgewählt ist aus Wasserstoff, $C_{1-10}$-Alkyl, $C_{2-10}$-Alkenyl, $C_{1-10}$-Cycloalkyl, $C_{6-10}$-Aryl oder $C_{6-10}$-Aralkyl, wobei Alkyl, Alkenyl, Cycloalkyl, Aryl und Aralkyl optional ersetzt sind durch einen oder mehrere Substituenten ausgewählt aus OH, $NR^{16}R^{17}$, wobei $R^{16}$ und $R^{17}$ entweder einzeln jeweils einen Wasserstoff oder ein $C_{1-12}$-Alkyl repräsentieren, welches optional Heteroatome in Form von Ether-Sauerstoff, Thioether-Schwefel oder tertiärem Amin-Stickstoff umfasst, oder $R^{16}$ und $R^{17}$ zusammen eine zweiwertige $C_{2-10}$-aliphatische Gruppe repräsentieren, welche optional Heteroatome in Form von Ether-Sauerstoff, Thioether-Schwefel oder tertiärem Amin-Stickstoff umfasst;

- B eine zweiwertige Verknüpfungsgruppe ist, unabhängig ausgewählt aus der Gruppe bestehend aus einer zweiwertigen gesättigten $C_{1-20}$-aliphatischen Gruppe, einer zweiwertigen ungesättigten $C_{2-20}$-aliphatischen Gruppe, einer zweiwertigen $C_{6-20}$-aromatischen Gruppe oder einer zweiwertigen $C_{6-20}$-Aralkylengruppe;
- $R^3$ ein $C_{1-10}$-Alkyl, $C_{2-10}$-Alkenyl, $C_{1-10}$-Cycloalkyl oder eine $C_{6-10}$-Arylgruppe ist, wobei Alkyl, Alkenyl, Cycloalkyl und Aryl optional ersetzt sind durch ein Halogenatom, eine Arylgruppe oder eine Aralkylgruppe;
- $R^4$ ein $C_{1-20}$-Alkyl oder eine $C_{6-10}$-Arylgruppe ist, wobei Alkyl und Aryl optional ersetzt sind durch ein Halogenatom, eine Arylgruppe oder eine Aralkylgruppe;
- c eine Ganzzahl von 0 bis 3 ist;

wodurch die Zusammensetzung (C) gebildet wird, wobei die Zusammensetzung (C) einen Tack-Wert T, gemessen nach dem Tack-Test, hat, wobei

$$T \geq \frac{K\left(\frac{T_0}{260\ Pa}\right)^{11} + L}{1 + \left(\frac{T_0}{260\ Pa}\right)^{11}} \qquad \text{(Gleichung 1)}$$

und K gleich groß wie oder größer als 6.000 Pa ist,
und L gleich groß wie oder größer als 1.000 Pa ist; und wobei der Gewichtsanteil der hydrophoben pyrogenen Kieselsäure (S), wie verwendet in Schritt 1, in Bezug auf das Gesamtgewicht der Zusammensetzung (C), wie erhalten in Schritt 2, gleich groß wie oder größer als 10 Gew.-% ist.

**2.** Das Verfahren nach Anspruch 1, wobei L gleich groß wie oder größer als 7.000 Pa, bevorzugt gleich groß wie oder größer als 8.000 Pa, noch besser gleich groß wie oder größer als 9.000 Pa, sogar noch besser gleich groß wie oder größer als 10.000 Pa, sogar noch besser gleich groß wie oder größer als 11.000 Pa, am besten gleich groß wie oder größer als 12.000 Pa ist.

**3.** Das Verfahren nach Anspruch 1, wobei K gleich groß wie oder größer als 7.000 Pa, bevorzugt gleich groß wie oder größer als 8.000 Pa, noch besser gleich groß wie oder größer als 9.000 Pa, sogar noch besser gleich groß wie oder größer als 10.000 Pa, sogar noch besser gleich groß wie oder größer als 11.000 Pa, am besten gleich groß wie oder größer als 12.000 Pa ist.

**4.** Das Verfahren nach irgendeinem der Ansprüche 1 bis 3, wobei Y in der Silangruppe (SG) der allgemeinen Formel (I) im silanmodifizierten Polymer (P) eine hydrolysierbare Gruppe ausgewählt aus der Gruppe bestehend aus Halogenatomen, Alkoxygruppen, Acyloxygruppen, Ketoxymatgruppen, Aminogruppen, Amidgruppen, Säureamidgruppen, Aminooxygruppen, Mercaptogruppen, und Alkenyloxygruppen ist.

**5.** Das Verfahren nach irgendeinem der Ansprüche 1 bis 4, wobei A eine zweiwertige Verknüpfungsgruppe unabhängig ausgewählt aus der Gruppe bestehend aus -O-, -O-CO-N($R^2$)-, -N($R^2$)-CO-O-, -N($R^2$)-CO-N($R^2$)-ist, wobei $R^2$ Wasserstoff, $C_{1-5}$-Alkyl oder eine $C_{1-6}$-Arylgruppe ist.

**6.** Das Verfahren nach irgendeinem der Ansprüche 1 bis 5, wobei das silanmodifizierte Polymer (P) ausgewählt ist aus der Gruppe bestehend aus silanmodifizierten Polysiloxanen, silanmodifizierten Polysiloxan-Harnstoff/Urethan-Copolymeren, silanmodifizierten Polyurethanen, silanmodifizierten Polyharnstoffen, silanmodifizierten Polyethern, silanmodifizierten Polyestern, silanmodifizierten Polyacrylaten und silanmodifizierten Polymethacrylaten, silanmodifizierten Polycarbonaten, silanmodifizierten Polystyrolen, silanmodifizierten Polyamiden, silanmodifizierten Polyvinylestern oder silanmodifizierten Polyolefinen wie, zum Beispiel, silanmodifiziertes Polyethylen, silanmodifiziertes Polybutadien, silanmodifizierte Ethylen-Olefin-Copolymere und silanmodifizierte Styrol-Butadien-Copolymere, oder eine Mischung von zwei oder mehreren davon.

**7.** Das Verfahren nach irgendeinem der Ansprüche 1 bis 6, wobei der Gewichtsanteil des silanmodifizierten Polymers (P), wie verwendet in Schritt 1, in Bezug auf das Gesamtgewicht der Zusammensetzung (C), gleich groß wie oder größer als 5 Gew.-%, bevorzugt gleich groß wie oder größer als 10 Gew.-%, noch besser gleich groß wie oder größer als 15 Gew.-% und gleich groß wie oder kleiner als 99 Gew.-%, bevorzugt gleich groß wie oder kleiner als 90 Gew.-%, noch besser gleich groß wie oder kleiner als 85 Gew.-%, sogar noch besser gleich groß wie oder kleiner als 75 Gew.-%, sogar noch besser gleich groß wie oder kleiner als 70 Gew.- %, am besten gleich groß wie oder kleiner als 65 Gew.-% ist.

**8.** Das Verfahren nach irgendeinem der Ansprüche 1 bis 7, wobei der Gewichtsanteil der hydrophoben pyrogenen Kieselsäure (S), wie verwendet in Schritt 1, in Bezug auf das Gesamtgewicht der Zusammensetzung (C), gleich groß wie oder kleiner als 30 Gew.-%, bevorzugt gleich groß wie oder kleiner als 20 Gew.- %, noch besser gleich groß wie oder kleiner als 15 Gew.-% ist.

**9.** Das Verfahren nach irgendeinem der Ansprüche 1 bis 8, wobei der Rheologiemodifikator (R) der allgemeinen Formel (II) eine Verbindung gewählt aus jenen der Formeln (VII) bis (IX) ist:

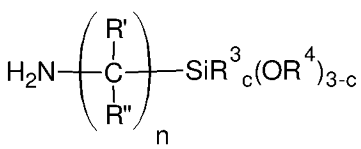

Formel (VII)

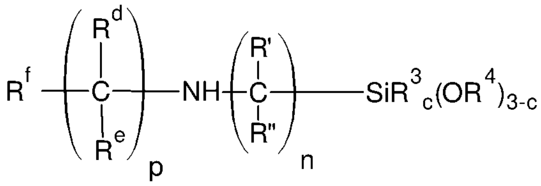

Formel (VIII)

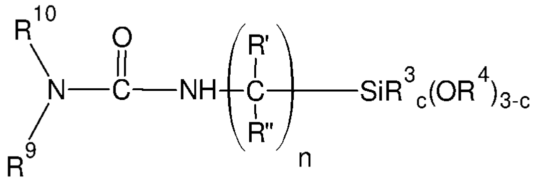

Formel (IX)

wobei n eine Ganzzahl von 1 bis 10 ist; c eine Ganzzahl von 0 bis 1 ist, wobei c bevorzugt 0 ist; wobei $R^3$ eine $C_{1-10}$-Alkylgruppe ist; $R^4$ eine $C_{1-10}$-Alkylgruppe ist, wobei $R^4$ bevorzugt eine Methyl-, Ethyl-, Propyl-, Isopropyl-, Butyl-, Isobutyl- oder Tert-Butylgruppe ist; R' und R", unabhängig voneinander und bei jedem Vorkommen, ausgewählt sein können aus Wasserstoff, $C_{1-10}$-Alkyl oder $C_{2-10}$-Alkenyl, wobei Alkyl und Alkenyl optional ersetzt sind durch ein Halogenatom, eine Arylgruppe oder eine Aralkylgruppe; wobei bevorzugt jedes R' und R" ausgewählt ist aus Wasserstoff oder einem $C_{1-4}$-Alkyl und wobei p eine Ganzzahl von 1 bis 10 ist; und wobei $R^9$ und $R^{10}$ jeweils unabhängig ausgewählt sind aus Wasserstoff oder $C_{1-10}$-Alkyl; und jedes $R^d$, $R^e$ und $R^f$ jeweils unabhängig ausgewählt ist aus Wasserstoff, OH $NR^{13}R^{14}$, wobei $R^{13}$ und $R^{14}$ jeweils unabhängig ausgewählt sind aus Wasserstoff oder $C_{1-10}$-Alkyl, wobei Alkyl optional ersetzt ist durch eine Aminogruppe.

**10.** Das Verfahren nach irgendeinem der Ansprüche 1 bis 9, wobei der Gewichtsanteil des Rheologiemodifikators (R), wie verwendet in Schritt 2, in Bezug auf das Gesamtgewicht der Zusammensetzung (C), gleich groß wie oder größer als 0,1 Gew.-%, bevorzugt gleich groß wie oder größer als 0,5 Gew.-%, noch besser gleich groß wie oder größer als 0,7 Gew.-% und gleich groß wie oder kleiner als 10 Gew.-%, bevorzugt gleich groß wie oder kleiner als 5 Gew.-%, noch besser gleich groß wie oder kleiner als 3 Gew.-%, am besten gleich groß wie oder kleiner als 2 Gew.-% ist.

**11.** Eine Zusammensetzung (C), bereitet nach dem Verfahren nach irgendeinem der Ansprüche 1 bis 10.

**12.** Ein Klebstoff und/oder Dichtstoff, welcher die Zusammensetzung (C) nach Anspruch 11 umfasst.

**13.** Eine ausgehärtete Zusammensetzung (C), zu erhalten aus der Zusammensetzung (C) nach Anspruch 11.

**14.** Ein Verfahren des Verbindens von zwei Substraten oder zumindest einem Teil von zwei Substraten durch Verwendung der Zusammensetzung (C) nach Anspruch 11, wobei das Verfahren die folgenden Schritte umfasst:

i) Aufbringen der Zusammensetzung (C) auf zumindest einen Teil eines Substrats S1 und/oder zumindest einen Teil eines Substrats S2;
ii) Inkontaktbringen von zumindest einem Teil der Substrate S1 und S2 über die aufgebrachte Zusammensetzung (C);
iii)Aushärten der Zusammensetzung (C) mittels Wasser, zum Beispiel in Form von Feuchtigkeit oder hydrierten Salzpartikeln, wodurch die ausgehärtete Zusammensetzung (C) gebildet wird;

wobei Substrate S1 und S2 gleich oder unterschiedlich voneinander sein können.

**15.** Ein Verfahren des Dichtens oder Beschichtens, durch Verwendung der Zusammensetzung (C) nach Anspruch 11, wobei dieses Verfahren die folgenden Schritte umfasst:

i') Aufbringen der Zusammensetzung (C) auf zumindest einen Teil eines Substrats S1 und/oder zwischen zumindest einen Teil von zwei Substraten S1 und S2;
ii') Aushärten der Zusammensetzung (C) mittels Wasser, zum Beispiel in Form von Feuchtigkeit oder hydrierten Salzpartikeln, wodurch die ausgehärtete Zusammensetzung (C) gebildet wird;

wobei Substrate S1 und S2 gleich oder unterschiedlich voneinander sein können.

## Revendications

**1.** Procédé de fabrication d'une composition [composition (C), ci-après] utilisable comme agent d'étanchéité et/ou adhésif, comprenant les étapes consistant à :

étape 1 : mélanger au moins un polymère modifié par silane [polymère modifié par silane (P), ci-après], dans lequel ledit polymère modifié par silane (P) comprend au moins un groupe silane de formule générale (I) ;

$$-(A)_b-(CH_2)_m-SiR^1{}_a(Y)_{3-a} \qquad \text{formule (I)}$$

dans lequel :

- A représente chacun indépendamment un groupe de liaison divalent choisi dans le groupe constitué de -O-, -S-, $-(R^2)N-$, $-O-CO-N(R^2)-$, $-N(R^2)-CO-O-$, $-N(R^2)-CO-NH-$, $-NH-CO-N(R^2)-$, et $-N(R^2)-CO-N(R^2)-$, dans lequel $R^2$ représente un hydrogène, un groupe alkyle en $C_{1-18}$, un groupe alcényle en $C_{2-18}$ ou un groupe aryle en $C_{1-6}$ ;
- $R^1$ représente un groupe alkyle en $C_{1-10}$, un groupe alcényle en $C_{2-10}$, un groupe cycloalkyle en $C_{1-10}$ ou un groupe aryle en $C_{6-10}$ ;
- Y représente chacun indépendamment un groupe hydroxyle ou un groupe hydrolysable ;
- a représente un nombre entier compris entre 0 et 3 ;
- b représente un nombre entier compris entre 0 et 1 ;
- m représente un nombre entier compris entre 0 et 6 ;

avec au moins une silice pyrogénée hydrophobe [silice pyrogénée hydrophobe (S), ci-après], ayant une aire de surface BET d'au moins 50 $m^2/g$ et dans lequel ladite au moins une silice pyrogénée hydrophobe (S) est produite en traitant une silice pyrogénée hydrophile avec un agent hydrophobe, dans lequel l'agent hydrophobe est l'octaméthylcyclotétrasiloxane ou des alkylsilanes, les alkylsilanes étant choisis parmi les octyltrialkoxysilanes ou les hexyltrialkoxysilanes, de manière à obtenir un mélange [mélange (M), ci-après], dans lequel ledit mélange (M) présente une valeur d'adhérence $T_0$, mesurée selon le procédé d'essai rhéologique oscillatoire d'adhérence telle que citée dans la description [essai d'adhérence, ci-après], égale ou inférieure à 1 000 Pa ;
étape 2 : ajouter au mélange (M) obtenu à l'étape 1, au moins un modificateur rhéologique de formule générale (II) [modificateur rhéologique (R), ci-après] ou un siloxane oligomère dans lequel le siloxane oligomère est formé par condensation de silanes partiellement ou complètement hydrolysés de formule générale (II),

$$X-B-SiR^3{}_c(OR^4)_{3-c} \qquad \text{formule (II)}$$

dans lequel :

- X est indépendamment choisi dans le groupe consistant en :

  - $SR^5$ dans lequel $R^5$ est indépendamment choisi parmi l'hydrogène, le groupe alkyle en $C_{1-10}$, le groupe alcényle en $C_{2-10}$, le groupe cycloalkyle en $C_{1-10}$, le groupe aryle en $C_{6-10}$ ou $-(C{=}O)-R^6$ dans lequel $R^6$ représente un groupe alkyle en $C_{1-10}$, un groupe alcényle en $C_{2-10}$ ou un groupe aryle en $C_{6-10}$,
  - $NR^7R^8$ dans lequel $R^7$ et $R^8$ sont chacun indépendamment choisis dans le groupe constitué de l'hydrogène ; le groupe alkyle en $C_{1-10}$, le groupe alcényle en $C_{2-10}$, le groupe cycloalkyle en $C_{1-10}$, le groupe aryle en $C_{6-10}$ ou le groupe aralkyle en $C_{6-10}$ dans lequel lesdits groupes alkyle, alcényle, cycloalkyle, aryle et aralkyle sont éventuellement substitués par un hydroxyle, $SiR^{11}{}_b(OR^{12})_{3-b}$, ou $NR^{13}R^{14}$ ; ou $-(C{=}O)-NR^9R^{10}$; et dans lequel $R^9$ et $R^{10}$ sont chacun indépendamment choisis dans le groupe constitué de l'hydrogène, le groupe alkyle en $C_{1-10}$, le groupe alcényle en $C_{2-10}$, le cycloalkyle en $C_{1-10}$, le groupe aryle en $C_{6-10}$ ou le groupe aralkyle en $C_{6-10}$ ; et dans lequel $R^{11}$ et $R^{12}$ sont chacun indépendamment choisi dans le groupe constitué d'un groupe alkyle en $C_{1-10}$, un groupe alcényle en $C_{2-10}$, un groupe cycloalkyle en $C_{1-10}$ ou un groupe aryle en $C_{6-10}$ ; et dans lequel $R^{13}$ et $R^{14}$ sont chacun indépendamment choisis dans le groupe constitué de l'hydrogène, le groupe alkyle en $C_{1-10}$, le groupe alcényle en $C_{2-10}$, le groupe cycloalkyle en $C_{1-10}$, le groupe aryle en $C_{6-10}$ ou le groupe aralkyle en $C_{6-10}$ et chaque groupe alkyle, alcényle, cycloalkyle, aryle et aralkyle facultatif est en outre éventuellement substitué par un groupe hydroxyle ou un groupe amino,
  - $OR^{15}$ dans lequel $R^{15}$ est indépendamment choisi parmi l'hydrogène, le groupe alkyle en $C_{1-10}$, le groupe alcényle en $C_{2-10}$, le groupe cycloalkyle en $C_{1-10}$, le groupe aryle en $C_{6-10}$ ou le groupe aralkyle en

$C_{6-10}$ dans lequel lesdits groupes alkyle, alcényle, cycloalkyle, aryle et aralkyle sont éventuellement substitués par un ou plusieurs substituants choisis parmi OH, $NR^{16}R^{17}$dans lequel $R^{16}$et $R^{17}$ représentent chacun individuellement un hydrogène ou un groupe alkyle en $C_{1-12}$ comprenant éventuellement des hétéroatomes sous forme d'éther d'oxygène, de thioéther de soufre ou d'azote d'amine tertiaire, ou $R^{16}$ et $R^{17}$ représentent ensemble un groupe aliphatique divalent en $C_{2-10}$, qui comprend éventuellement des hétéroatomes sous forme d'éther-oxygène, de thioéther-soufre ou d'azote d'amine tertiaire ;

- B représente un groupe de liaison divalent choisi indépendamment dans le groupe constitué d'un groupe aliphatique saturé divalent en $C_{1-20}$, d'un groupe aliphatique insaturé divalent en $C_{2-20}$, d'un groupe aromatique divalent en $C_{6-20}$ ou d'un groupe aralkylène divalent en $C_{6-20}$ ;
- $R^3$ représente un groupe alkyle en $C_{1-10}$, un groupe alcényle en $C_{2-10}$, un groupe cycloalkyle en $C_{1-10}$ ou un groupe aryle en $C_{6-10}$, dans lequel lesdits groupes alkyle, alcényle, cycloalkyle et aryle sont éventuellement substitués par un atome d'halogène, un groupe aryle ou un groupe aralkyle ;
- $R^4$ représente un groupe alkyle en $C_{1-20}$ ou un groupe aryle en $C_{6-10}$ dans lequel lesdits groupes alkyle et aryle sont éventuellement substitués par un atome d'halogène, un groupe aryle ou un groupe aralkyle ;
- c représente un nombre entier compris entre 0 et 3 ;

formant ainsi la composition (C) dans lequel ladite composition (C) a une valeur d'adhérence T, mesurée conformément à l'essai d'adhérence, dans lequel

$$T \geq \frac{K\left(\frac{T_0}{260\,\mathrm{Pa}}\right)^{11} + L}{1 + \left(\frac{T_0}{260\,\mathrm{Pa}}\right)^{11}} \qquad \text{(équation 1)}$$

et K est égal ou supérieur à 6000 Pa,
et L est égal ou supérieur à 1000 Pa ; et dans lequel le pourcentage en poids de la silice pyrogénée hydrophobe (S) utilisée à l'étape 1, par rapport au poids total de la composition (C) obtenue à l'étape 2, est égal ou supérieur à 10 % en poids.

2. Procédé selon la revendication 1, dans lequel L est égal ou supérieur à 7000 Pa, de préférence égal ou supérieur à 8000 Pa, plus préférentiellement égal ou supérieur à 9000 Pa, encore plus préférentiellement égal ou supérieur à 10000 Pa, encore plus préférentiellement égal ou supérieur à 11000 Pa, le plus préférentiellement égal ou supérieur à 12000 Pa.

3. Procédé selon la revendication 1, dans lequel K est supérieur ou égal à 7000 Pa, de préférence supérieur ou égal à 8000 Pa, plus préférentiellement supérieur ou égal à 9000 Pa, encore plus préférentiellement supérieur ou égal à 10000 Pa, encore plus préférentiellement supérieur ou égal à 11000 Pa, le plus préférentiellement supérieur ou égal à 12000 Pa.

4. Procédé selon l'une quelconque des revendications 1 à 3, dans lequel Y dans le groupe silane (SG) de formule générale (I) du polymère modifié par silane (P) est un groupe hydrolysable choisi dans le groupe constitué des atomes d'halogène, les groupes alcoxy, les groupes acyloxy, les groupes cétoxymate, les groupes amino, les groupes amide, les groupes amide acide, les groupes aminooxy, les groupes mercapto, et les groupes alcényloxy.

5. Procédé selon l'une quelconque des revendications 1 à 4, dans lequel A est un groupe de liaison divalent choisi indépendamment dans le groupe constitué de -O-, $-O-CON(R^2)-$, $-N(R^2)-CO-O-$, $-N(R^2)-CO-N(R^2)-$, dans lequel $R^2$ est un hydrogène, un groupe alkyle en $C_{1-5}$ ou un groupe aryle en $C_{1-6}$

6. Procédé selon l'une quelconque des revendications 1 à 5, dans lequel le polymère modifié par silane (P) est choisi dans le groupe constitué des polysiloxanes modifiés par des silanes, les copolymères de polysiloxane-urée/uréthane modifiés par des silanes, les polyuréthanes modifiés par des silanes, les polyurées modifiés par des silanes, les polyéthers modifiés par des silanes, les polyesters modifiés par des silanes, les polyacrylates modifiés par des silanes et les polyméthacrylates modifiés par des silanes, les polycarbonates modifiés par le silane, les polystyrènes modifiés par le silane, les polyamides modifiés par le silane, les esters polyvinyliques modifiés par le silane ou les polyoléfines modifiées par le silane tel que, par exemple, le polyéthylène modifié par le silane, le poly-butadiène modifié par le

silane, les copolymères éthylène-oléfine modifiés par le silane et les copolymères styrène-butadiène modifiés par le silane, ou un mélange de deux ou plusieurs d'entre eux.

7. Procédé selon l'une quelconque des revendications 1 à 6, dans lequel le pourcentage en poids du polymère modifié par silane (P) utilisé à l'étape 1, par rapport au poids total de la composition (C), est égal ou supérieur à 5 % en poids, de préférence égal ou supérieur à 10 % en poids, plus préférentiellement égal ou supérieur à 15 % en poids, et égal ou inférieur à 99 % en poids.% et égale ou inférieure à 99 % en poids, de préférence égale ou inférieure à 90 % en poids, plus préférentiellement égale ou inférieure à 85 % en poids, encore plus préférentiellement égale ou inférieure à 75 % en poids, encore plus préférentiellement égale ou inférieure à 70 % en poids, plus préférentiellement égale ou inférieure à 65 % en poids.

8. Procédé selon l'une quelconque des revendications 1 à 7, dans lequel le pourcentage en poids de la silice pyrogénée hydrophobe (S) utilisée à l'étape 1, par rapport au poids total de la composition (C), est égal ou inférieur à 30 % en poids, de préférence égal ou inférieur à 20 % en poids, plus préférentiellement égal ou inférieur à 15 % en poids.

9. Procédé selon l'une quelconque des revendications 1 à 8, dans lequel le modificateur rhéologique (R) de formule générale (II), est un composé choisi parmi ceux des formules (VII) à (IX) :

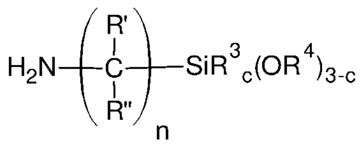

formule (VII)

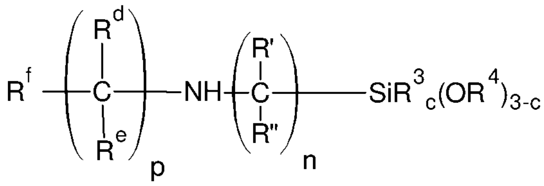

formule (VIII)

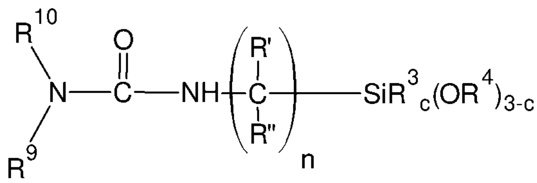

formule (IX)

où n représente un nombre entier allant de 1 à 10 ; c représente un nombre entier allant de 0 à 1, de préférence c représente 0 ; où $R^3$ représente un groupe alkyle en $C_{1-10}$ ; $R^4$ représente un groupe alkyle en $C_{1-10}$, de préférence $R^4$ représente un groupe méthyle, éthyle, propyle, isopropyle, butyle, isobutyle ou tert-butyle ; R' et R", indépendamment l'un de l'autre et à chaque occurrence, peuvent être choisis parmi l'hydrogène, le groupe alkyle en $C_{1-10}$ ou le groupe alcényle en $C_{2-10}$, dans lequel lesdits groupes alkyle et alcényle sont éventuellement substitués par un atome d'halogène, un groupe aryle ou un groupe aralkyle ; de préférence, R' et R" sont choisis parmi l'hydrogène ou un groupe alkyle en $C_{1-4}$ et dans lequel p représente un nombre entier allant de 1 à 10 ; et dans lequel $R^9$ et $R^{10}$ sont chacun indépendamment choisi parmi l'hydrogène ou un groupe alkyle en $C_{1-10}$ ; et $R^d$, $R^e$ et $R^f$ sont chacun indépendamment choisi parmi l'hydrogène, OH ou $NR^{13}R^{14}$ dans lequel $R^{13}$ et $R^{14}$ sont chacun indépendamment choisi parmi l'hydrogène ou un groupe alkyle en $C_{1-10}$ dans lequel ledit alkyle est éventuellement substitué par un groupe aminé.

10. Procédé selon l'une quelconque des revendications 1 à 9, dans lequel le pourcentage en poids du modificateur rhéologique (R) utilisé à l'étape 2, par rapport au poids total de la composition (C), est égal ou supérieur à 0,1 % en poids, de préférence égal ou supérieur à 0,5 % en poids, plus préférentiellement égal ou supérieur à 0,7 % en poids et égal à ou inférieur à 10 % en poids, de préférence égal ou inférieur à 5 % en poids, de préférence égal ou inférieur à 3 % en poids, de préférence égal ou inférieur à 2 % en poids.

**11.** Composition (C) préparée selon le procédé de l'une quelconque des revendications 1 à 10.

**12.** Agent adhésif et/ou d'étanchéité comprenant la composition (C) selon la revendication 11.

**13.** Composition (C) durcie, obtenue à partir de la composition (C) selon la revendication 11.

**14.** Procédé de liaison de deux substrats ou d'au moins une partie de deux substrats à l'aide de la composition (C) selon la revendication 11, dans lequel ledit procédé comprend les étapes suivantes consistant à :

i) appliquer la composition (C) sur au moins une partie d'un substrat S1 et/ou au moins une partie d'un substrat S2 ;
ii) mettre en contact au moins une partie des substrats S1 et S2 par l'intermédiaire de la composition (C) appliquée ;
iii) durcir la composition (C) au moyen d'eau, par exemple sous forme d'humidité ou de particules de sel hydraté, formant ainsi la composition durcie (C) ;

dans lequel les substrats S1 et S2 peuvent être identiques ou différents l'un de l'autre.

**15.** Procédé de scellement ou de revêtement, en utilisant la composition (C) selon la revendication 11, dans lequel ledit procédé comprend les étapes consistant à :

i') appliquer la composition (C) sur au moins une partie d'un substrat S1 et/ou entre au moins une partie de deux substrats S1 et S2 ;
ii') durcir la composition (C) au moyen d'eau, par exemple, sous forme d'humidité ou de particules de sel hydraté, formant ainsi la composition durcie (C) ;

dans lequel les substrats S1 et S2 peuvent être identiques ou différents l'un de l'autre.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20150203624 A1
- EP 0240044 A2
- WO 2004090060 A2
- EP 1043356 A1
- EP 2581406 A1
- WO 2006078756 A1
- WO 2014033273 A2
- US 20120298300 A1
- EP 0819749 A2
- US 2005211580 A1
- JP 2010111745 A
- US 2015007938 A1
- WO 2009014077 A1
- US 8697815 B2
- US 8076401 B2
- US 4962152 A
- US 20140094553 A1
- WO 2009130298 A1
- WO 2014187865 A1